# EUROPEAN PATENT APPLICATION

(11) **EP 4 568 328 A1**
(43) Date of publication of application: **11.06.2025**
(21) Application number: 23849509.7
(22) Date of filing: 03.08.2023
(51) Int. Cl.: H04W 24/08, H04W 24/02

(54) **QOE MEASUREMENT METHOD, COMMUNICATION APPARATUS AND STORAGE MEDIUM**

(30) Priority: 05.08.2022 CN 202210938491; 05.08.2022 CN 202210940106
(71) Applicant: China United Network Communications Group Company Limited, Beijing 100033 (CN)
(72) Inventor: LI, Pei, Beijing 100033 (CN); LI, Fuchang, Beijing 100033 (CN); CAO, Gen, Beijing 100033 (CN)
(74) Representative: Murgitroyd & Company
(86) International application number: PCT/CN2023/111088
(87) International publication number: WO 2024/027805

(57) **Abstract**

The present application relates to the technical field of communications, and provides a QoE measurement method, a communication apparatus and a storage medium, for use in enabling a terminal device to acquire QoE measurement parameters required by a secondary node (SN). The method is applied to a first access network device, and the first access network device is the SN. The method comprises: determining configuration information of QoE measurement, the configuration information of QoE measurement being used for instructing a terminal device to perform QoE measurement, and the configuration information of QoE measurement comprising unpackaged target QoE measurement parameters used for optimizing the first access network device; and sending the configuration information of QoE measurement to the terminal device. Embodiments of the present application are used in a QoE measurement configuration process.

## Description

The present disclosure claims priority to Chinese Patent Application No. 202210938491.9, filed with Chinese National Intellectual Property Administration (CNIPA) on August 5, 2022 and titled "Configuration method for QoE measurement, access network equipment and storage medium", and claims priority to Chinese Patent Application No. 202210940106.4, filed with CNIPA on August 5, 2022 and titled "QoE measurement report transmission method, device and storage medium, the entire content of which is incorporated herein by reference.

### TECHNICAL FIELD

The present disclosure relates to the field of communication technology, and in particular to a quality of experience (QoE) measurement method, a communication apparatus, and a storage medium.

### BACKGROUND

With the continuous development of communication systems, a terminal device may simultaneously use services provided by a plurality of access network devices (for example, a master node (MN) and a secondary node (SN)). In order to facilitate the MN to optimize its own network performance, the MN transmits a QoE measurement parameter(s) required by itself to the terminal device, so that the terminal device may report a measurement result of the QoE measurement parameter required by the MN. In this way, the MN may perform network optimization according to the measurement result of the QoE measurement parameter required by the MN.

The SN also needs the measurement result of the QoE measurement parameter required by itself to perform the network optimization. Therefore, it is an urgent problem for those skilled in the art to enable the terminal device to acquire the QoE measurement parameter required by the SN.

### SUMMARY

The present disclosure provides a QoE measurement method, a communication apparatus, and a storage medium, which enable a terminal device to acquire a QoE measurement parameter required by an SN.

For this, the present disclosure adopts following technical solutions.

In a first aspect, the present disclosure provides a QoE measurement method applied to a first access network device, the first access network device is a secondary node (SN). The method includes: determining configuration information for a QoE measurement. The configuration information for the QoE measurement is used to instruct a terminal device to perform the QoE measurement. The configuration information for the QoE measurement includes an unencapsulated target QoE measurement parameter used to optimize the first access network device. The method further includes: transmitting the configuration information for the QoE measurement to the terminal device.

In a possible implementation, the determining the configuration information for the QoE measurement includes: receiving a first indication message from a second access network device, where the first indication message includes an identifier of the QoE measurement and a QoE measurement parameter set, the QoE measurement parameter set includes at least one unencapsulated QoE measurement parameter, and the second access network device is a master node (MN); determining, from the QoE measurement parameter set, a QoE measurement parameter used to optimize the first access network device as the target QoE measurement parameter; and determining the configuration information for the QoE measurement according to the target QoE measurement parameter.

In a possible implementation, the transmitting the configuration information for the QoE measurement to the terminal device includes: transmitting the configuration information for the QoE measurement to the terminal device based on a first radio bearer. The first radio bearer is used to transmit information between the first access network device and the terminal device.

In a possible implementation, the transmitting the configuration information for the QoE measurement to the terminal device includes: transmitting a second indication message to a second access network device. The second indication message is used to instruct the second access network device to transmit, based on a second radio bearer, the configuration information for the QoE measurement to the terminal device. The second radio bearer is used to transmit information between the second access network device and the terminal device.

In a possible implementation, the first indication message further includes at least one of: an Internet Protocol address of a QoE measurement collection entity, a service type of the QoE measurement, and a type of the QoE measurement.

In a possible implementation, the configuration information for the QoE measurement further includes configuration information for a third radio bearer. The third radio bearer is used to transmit the configuration information for the QoE measurement between the first access network device and the terminal device.

In a possible implementation, the first indication message is carried in secondary node-terminal device application layer measurement reconfiguration information (S-NG-RAN node UE Application Layer Measurement Configuration Information). The secondary node-terminal device application layer measurement reconfiguration information (S-NG-RAN node UE Application Layer Measurement Configuration Information) is carried in secondary node quality management control reconfiguration information (S-NG-RAN node QMC Configuration Information). The secondary node quality management control reconfiguration information (S-NG-RAN node QMC Configuration Information) is carried in a secondary node addition request (S-NODE ADDITION REQUEST) or a secondary node modification request (S-NODE MODIFICATION REQUEST). The configuration information for the QoE measurement is carried in the secondary node to the master node container (S-NG-RAN node to M-NG-RAN node Container) information. The secondary node to the master node container (S-NG-RAN node to M-NG-RAN node Container) information is carried in a response to the secondary node addition request (S-NODE ADDITION REQUEST ACKNOWLEDGE) or a response to the secondary node modification request (S-NODE MODIFICATION REQUESTACKNOWLEDGE).

In a possible implementation, the first radio bearer used to transmit the configuration information for the QoE measurement is a signaling radio bearer SRB3 of the first radio bearer.

In a possible implementation, the second radio bearer used to transmit the configuration information for the QoE measurement is a signaling radio bearer SRB1 of the second radio bearer.

In a second aspect, the present disclosure provides a QoE measurement method applied to a terminal device. The method includes: receiving configuration information for a QoE measurement from a first access network device. The configuration information for the QoE measurement is used to instruct the terminal device to perform the QoE measurement. The configuration information for the QoE measurement includes an unencapsulated target QoE measurement parameter used to optimize the first access network device. The first access network device is a secondary node (SN).

In a possible implementation, a first indication message further includes at least one of: an Internet Protocol address of a QoE measurement collection entity, a service type of the QoE measurement, and a type of the QoE measurement.

In a possible implementation, the configuration information for the QoE measurement further includes configuration information for a third radio bearer. The third radio bearer is used to transmit the configuration information for the QoE measurement between the first access network device and the terminal device.

In a possible implementation, the first indication message is carried in the secondary node-terminal device application layer measurement reconfiguration information (S-NG-RAN node UE Application Layer Measurement Configuration Information). The S-NG-RAN node UE Application Layer Measurement Configuration Information is carried in secondary node quality management control reconfiguration information (S-NG-RAN node QMC Configuration Information). The S-NG-RAN node QMC Configuration Information is carried in a secondary node addition request (S-NODE ADDITION REQUEST) or a secondary node modification request (S-NODE MODIFICATION REQUEST). The configuration information for the QoE measurement is carried in the secondary node to the master node container (S-NG-RAN node to M-NG-RAN node Container) information. The S-NG-RAN node to M-NG-RAN node Container information is carried in a response to the secondary node addition request (S-NODE ADDITION REQUEST ACKNOWLEDGE) or a response to the secondary node modification request (S-NODE MODIFICATION REQUEST ACKNOWLEDGE).

In a possible implementation, target configuration information is received from the second access network device. The target configuration information includes configuration information generated by the first access network device. The second access network device is a master node (MN). In a case where the target configuration information does not include configuration information for a first radio bearer, configuration information for a second radio bearer is acquired. The first radio bearer is used to transmit information between the terminal device and the first access network device, and the second radio bearer is used to transmit information between the terminal device and the second access network device. The second radio bearer is established according to the configuration information for the second radio bearer, and a third indication message is transmitted to the second access network device based on the second radio bearer. The third indication message is used to instruct the second access network device to transmit a first QoE measurement report to the first access network device. The first QoE measurement report is obtained by performing measurement based on the configuration information for the QoE measurement configured by the first access network device.

In a possible implementation, in a case where the configuration information includes the configuration information for the first radio bearer, the method further includes: establishing the first radio bearer according to the configuration information for the first radio bearer, and transmitting the first QoE measurement report to the first access network device based on the first radio bearer.

In a possible implementation, the transmitting the third indication message to the first access network device based on the second radio bearer includes: transmitting a fourth indication message to the second access network device based on the second radio bearer. The fourth indication message includes the third indication message and a second QoE measurement report. The second QoE measurement report is obtained by performing measurement based on the configuration information for the QoE measurement configured by the second access network device.

In a possible implementation, configuration information for a third radio bearer is received from the first access network device. The third radio bearer is used to transmit the first QoE measurement report. The third radio bearer is established according to the configuration information for the third radio bearer, and the first QoE measurement report is transmitted to the first access network device based on the third radio bearer.

In a possible implementation, the first QoE measurement report includes: an identifier of the first QoE measurement and a measurement result of the target QoE measurement parameter, where the measurement result is unencapsulated.

In a possible implementation, the first QoE measurement report is carried in radio resource bearer transfer (RRC Transfer) information, or may also be carried in target information. The target information is used for transmission of the first QoE measurement report and/or the second QoE measurement report.

In a possible implementation, the first radio bearer used to transmit the first QoE measurement report is a signaling radio bearer SRB5 of the first radio bearer.

In a possible implementation, the second radio bearer used to transmit the second QoE measurement report is a signaling radio bearer SRB4 of the second radio bearer.

In a third aspect, the present disclosure provides a communication apparatus for a first access network device, and the communication apparatus includes a communication unit and a processing unit. The processing unit is configured to determine configuration information for a QoE measurement. The configuration information for the QoE measurement is used to instruct a terminal device to perform the QoE measurement. The configuration information for the QoE measurement includes an unencapsulated target QoE measurement parameter used to optimize the first access network device. The communication unit is configured to transmit the configuration information for the QoE measurement to the terminal device.

In a possible implementation, the communication unit is further configured to receive a first indication message from a second access network device. The first indication message includes an identifier of the QoE measurement and a QoE measurement parameter set. The QoE measurement parameter set includes at least one unencapsulated QoE measurement parameter. The second access network device is a master node (MN). The processing unit is further configured to determine, from the QoE measurement parameter set, a QoE measurement parameter used to optimize the first access network device as the target QoE measurement parameter. The processing unit is further configured to determine the configuration information for the QoE measurement according to the target QoE measurement parameter.

In a possible implementation, the communication unit is further configured to transmit the configuration information for the QoE measurement to the terminal device based on a first radio bearer. The first radio bearer is used to transmit information between the first access network device and the terminal device.

In a possible implementation, the communication unit is further configured to transmit a second indication message to the second access network device. The second indication message is used to instruct the second access network device to transmit, based on a second radio bearer, the configuration information for the QoE measurement to the terminal device. The second radio bearer is used to transmit information between the second access network device and the terminal device.

In a possible implementation, the first indication message further includes at least one of: an Internet Protocol address of a QoE measurement collection entity, a service type of the QoE measurement, and a type of the QoE measurement.

In a possible implementation, the configuration information for the QoE measurement further includes configuration information for a third radio bearer. The third radio bearer is used to transmit the configuration information for the QoE measurement between the first access network device and the terminal device.

In a possible implementation, the first indication message is carried in secondary node-terminal device application layer measurement reconfiguration information (S-NG-RAN node UE Application Layer Measurement Configuration Information). The secondary node-terminal device application layer measurement reconfiguration information (S-NG-RAN node UE Application Layer Measurement Configuration Information) is carried in secondary node quality management control reconfiguration information (S-NG-RAN node QMC Configuration Information). The secondary node quality management control reconfiguration information (S-NG-RAN node QMC Configuration Information) is carried in a secondary node addition request (S-NODE ADDITION REQUEST) or a secondary node modification request (S-NODE MODIFICATION REQUEST). The configuration information for the QoE measurement is carried in the secondary node to the master node container (S-NG-RAN node to M-NG-RAN node Container) information. The secondary node to the master node container (S-NG-RAN node to M-NG-RAN node Container) information is carried in a response to the secondary node addition request (S-NODE ADDITION REQUEST ACKNOWLEDGE) or a response to the secondary node addition request (S-NODE MODIFICATION REQUEST ACKNOWLEDGE).

In a possible implementation, the first radio bearer used to transmit the configuration information for the QoE measurement is a signaling radio bearer SRB3 of the first radio bearer.

In a possible implementation, the second radio bearer used to transmit the configuration information for the QoE measurement is a signaling radio bearer SRB1 of the second radio bearer.

In a fourth aspect, the present disclosure provides a communication apparatus for a terminal device, the communication apparatus includes a communication unit and a processing unit. The processing unit is configured to instruct the communication unit to receive configuration information for a QoE measurement from a first access network device. The configuration information for the QoE measurement is used to instruct the terminal device to perform the QoE measurement. The configuration information for the QoE measurement includes an unencapsulated target QoE measurement parameter used to optimize the first access network device. The first access network device is a secondary node (SN).

In a possible implementation, a first indication message further includes at least one of: an Internet Protocol address of a QoE measurement collection entity, a service type of the QoE measurement, and a type of the QoE measurement.

In a possible implementation, the configuration information for the QoE measurement further includes configuration information for a third radio bearer. The third radio bearer is used to transmit the configuration information for the QoE measurement between the first access network device and the terminal device.

In a possible implementation, the first indication message is carried in secondary node-terminal device application layer measurement reconfiguration information (S-NG-RAN node UE Application Layer Measurement Configuration Information). The S-NG-RAN node UE Application Layer Measurement Configuration Information is carried in secondary node quality management control reconfiguration information (S-NG-RAN node QMC Configuration Information). The S-NG-RAN node QMC Configuration Information is carried in a secondary node addition request (S-NODE ADDITION REQUEST) or a secondary node modification request (S-NODE MODIFICATION REQUEST). The configuration information for the QoE measurement is carried in the secondary node to the master node container (S-NG-RAN node to M-NG-RAN node Container) information. The S-NG-RAN node to M-NG-RAN node Container information is carried in a response to the secondary node addition request (S-NODE ADDITION REQUEST ACKNOWLEDGE) or a response to the secondary node modification request response (S-NODE MODIFICATION REQUEST ACKNOWLEDGE).

In a possible implementation, the processing unit is configured to instruct the communication unit to receive target configuration information from a second access network device. The target configuration information includes configuration information generated by the first access network device. The second access network device is a master node (MN). In a case where the target configuration information does not include configuration information for a first radio bearer, the processing unit is configured to instruct the communication unit to acquire configuration information for a second radio bearer. The first radio bearer is used to transmit information between the terminal device and the first access network device, and the second radio bearer is used to transmit information between the terminal device and the second access network device. The processing unit is further configured to establish the second radio bearer according to the configuration information for the second radio bearer, and instruct the communication unit to transmit a third indication message to the second access network device based on the second radio bearer. The third indication message is used to instruct the second access network device to transmit a first QoE measurement report to the first access network device. The first QoE measurement report is obtained by performing measurement based on the configuration information for the QoE measurement configured by the first access network device.

In a possible implementation, in a case where the configuration information includes the configuration information for the first radio bearer, the method further includes: the processing unit is further configured to establish the first radio bearer according to the configuration information for the first radio bearer, and transmit the first QoE measurement report to the first access network device based on the first radio bearer.

In a possible implementation, regarding transmitting the third indication message to the first access network device based on the second radio bearer, the processing unit is further configured to transmit a fourth indication message to the second access network device based on the second radio bearer. The fourth indication message includes the third indication message and a second QoE measurement report. The second QoE measurement report is obtained by performing measurement based on the configuration information for the QoE measurement configured by the second access network device.

In a possible implementation, the processing unit is further configured to instruct the communication unit to receive configuration information for a third radio bearer from the first access network device. The third radio bearer is used to transmit the first QoE measurement report. The processing unit is further configured to establish the third radio bearer according to the configuration information for the third radio bearer, and instruct the communication unit to transmit the first QoE measurement report to the first access network device based on the third radio bearer.

In a possible implementation, the first QoE measurement report includes: an identifier of the first QoE measurement and a measurement result of the target QoE measurement parameter, where the measurement result is unencapsulated.

In a possible implementation, the first QoE measurement report is carried in radio resource bearer transfer (RRC Transfer) information, or may also be carried in target information. The target information is used for transmission of the first QoE measurement report and/or the second QoE measurement report.

In a possible implementation, the first radio bearer used to transmit the first QoE measurement report is a signaling radio bearer SRB5 of the first radio bearer.

In a possible implementation, the second radio bearer used to transmit the second QoE measurement report is a signaling radio bearer SRB4 of the second radio bearer.

In a fifth aspect, the present disclosure provides a communication apparatus, and the communication apparatus includes a processor and a communication interface coupled with each other. The processor is used to run a computer program or instructions to implement the QoE measurement method according to the first aspect and any one of possible implementations of the first aspect.

In a sixth aspect, the present disclosure provides a computer readable storage medium having instructions stored therein, the instructions, when being executed on a terminal, cause the terminal to perform the QoE measurement method according to the first aspect and any one of possible implementations of the first aspect.

In a seventh aspect, the present disclosure provides a computer program product containing instructions. The computer program product, when running on a communication apparatus, causes the communication apparatus to perform the QoE measurement method according to the first aspect and any one of possible implementations of the first aspect.

In an eighth aspect, the present disclosure provides a chip, and the chip includes a processor and a communication interface coupled with each other. The processor is configured to run a computer program or instructions to implement the QoE measurement method according to the first aspect and any one of possible implementations of the first aspect.

Specifically, the chip provided by the present disclosure further includes a memory configured to store a computer program or instructions.

The above technical solutions bring about at least beneficial effects as follows. In the QoE measurement method provided by the present disclosure, the first access network device (i.e., SN) determines the configuration information for the QoE measurement (the configuration information for the QoE measurement is used to instruct the terminal device to perform the QoE measurement), and the configuration information for the QoE measurement includes an unencapsulated target QoE measurement parameter for optimizing the first access network device. After the first access network device determines the configuration information for the QoE measurement, the first access network device transmits the configuration information for the QoE measurement to the terminal device. As such, the terminal device may acquire the unencapsulated target QoE measurement parameter for optimizing the first access network device (i.e., SN) included in the configuration information for the QoE measurement.

### BRIEF DESCRIPTION OF THE DRAWINGS

FIG. 1 is a flow chart of signaling-based QoE measurement as provided by the embodiments of the present disclosure.
FIG. 2 is a flow chart of management-based QoE measurement as provided by the embodiments of the present disclosure.
FIG. 3 is a flow chart of a configuration process of a secondary node as provided by the embodiments of the present disclosure.
FIG. 4 is a flow chart of a modification process of a secondary node as provided by the embodiments of the present disclosure.
FIG. 5 is a structural diagram of a communication system as provided by the embodiments of the present disclosure.
FIG. 6 is a flow chart of a QoE measurement method as provided by the embodiments of the present disclosure.
FIG. 7 is another flow chart of the QoE measurement method as provided by the embodiments of the present disclosure.
FIG. 8 is a further flow chart of the QoE measurement method as provided by the embodiments of the present disclosure.
FIG. 9 is yet a further flow chart of the QoE measurement method as provided by the embodiments of the present disclosure.
FIG. 10 is a flow chart of another QoE measurement method as provided by the embodiments of the present disclosure.
FIG. 11 is another flow chart of the QoE measurement method as provided by the embodiments of the present disclosure.
FIG. 12 is yet a further flow chart of the QoE measurement method as provided by the embodiments of the present disclosure.
FIG. 13 is yet a still further flow chart of the QoE measurement method as provided by the embodiments of the present disclosure.
FIG. 14 is yet a still further flow chart of the QoE measurement method as provided by the embodiments of the present disclosure.
FIG. 15 is yet a still further flow chart of the QoE measurement method as provided by the embodiments of the present disclosure.
FIG. 16 is yet a still further flow chart of the QoE measurement method as provided by the embodiments of the present disclosure.
FIG. 17 is a flow chart of a further QoE measurement method as provided by the embodiments of the present disclosure.
FIG. 18 is a structural schematic diagram of a communication apparatus as provided by the embodiments of the present disclosure.
FIG. 19 is a structural schematic diagram of another communication apparatus as provided by the embodiments of the present disclosure.

### DETAILED DESCRIPTION

The QoE measurement method, communication apparatus and storage medium provided by the embodiments of the present disclosure will be described in detail below with reference to the accompanying drawings.

The term "and/or" in the present document is only used to describe an association relationship between associated objects, and means the existence of three relationships, for example, A and/or B may mean the existence of only A, both A and B, and only B.

The terms "first" and "second" in the specification and accompanying drawings of the present disclosure are used to distinguish different objects, or to distinguish different processing of a same object, rather than describing a specific order of objects.

Furthermore, the terms "comprising/including" and "having" and any variations thereof mentioned in the descriptions of the present disclosure are intended to cover non-exclusive inclusion. For example, a procedure, method, a system, a product or a device that contains a series of steps or units is not limited to the listed steps or units, but optionally also includes other unlisted steps or units, or optionally also includes other steps or units inherent to such procedure, method, product or device.

It should be noted that, in the embodiments of the present disclosure, the words such as "exemplary" or "for example" are used to represent an example, illustration, or explanation. Any embodiment or design solution described in connection with "exemplary" or "for example" in the embodiments of the present disclosure is not necessarily to be construed as preferred or advantageous over other embodiments or design solutions. To be precise, the usage of the words, such as "exemplary" or "for example", is intended to present relevant concepts in a specific manner.

In the description of the embodiments of the present disclosure, "multiple" means two or more than two, unless otherwise stated.

### I . QoE Measurement

QoE measurement refers to measurement of user's comprehensive subjective experience of the quality and performance (including effectiveness, availability and the like) of the service(s), that is, it measures the user's experience in using service applications. As such, operators may make a comprehensive evaluation on the service quality and performance based on the QoE measurement result(s), identify a problem of the service(s) based on the comprehensive evaluation result(s) of the user on the service(s), and make adaptive adjustments to the communication network based on the identified problem(s).

It should be noted that, the QoE measurement includes: 1.1, signaling-based QoE measurement, and 1.2, management-based QoE measurement. They are explained in details below, respectively.

### 1.1. Signaling-based QoE measurement

The signaling-based QoE measurement refers to a QoE measurement performed on a specific terminal device, and the signaling-based QoE measurement may be performed in real time.

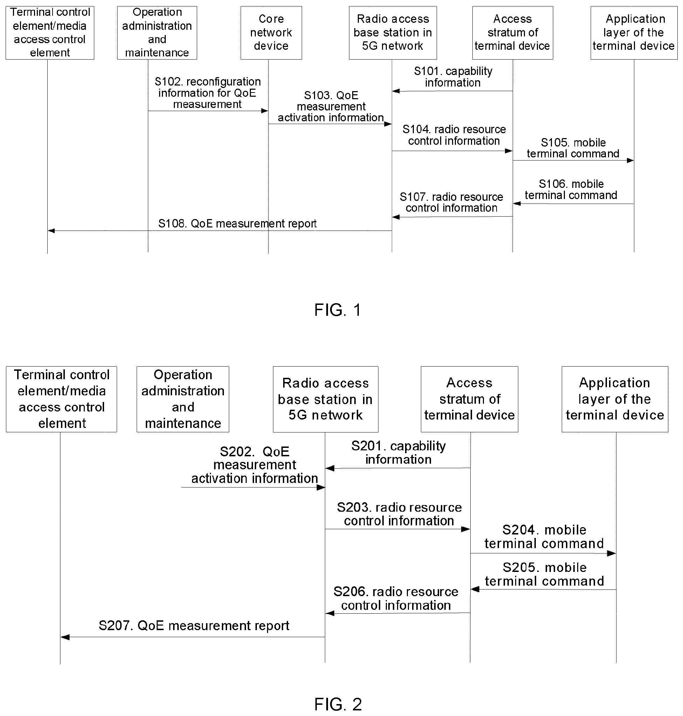

As shown in FIG. 1, a process of the signaling-based QoE measurement includes the S101-S108 as follows.

In S101, an access stratum (AS) of a terminal device transmits capability information to a next generation radio access network (NG-RAN) in the fifth generation mobile communication technology (5G) network. Correspondingly, the NG-RAN receives the capability information transmitted from the AS of the terminal device.

Herein, the capability information indicates that the terminal device has a capability of performing a QoE measurement.

In a possible implementation, the capability information may be capability information transmitted by the terminal device to the NG-RAN.

In S102, an operation administration and maintenance (OAM) device transmits reconfiguration information for a QoE measurement to a core network device. Correspondingly, the core network device receives the reconfiguration information for the QoE measurement from the OAM device.

Herein, the reconfiguration information for the QoE measurement is used to trigger the core network device to configure the QoE measurement, and it carries a configuration parameter for the QoE measurement.

In a possible implementation, the reconfiguration information for the QoE measurement may be configuration information for the QoE measurement (Configure QoE Measurement information) transmitted by the OAM device to the core network device.

It is noted that, the configuration information for the QoE measurement may include a configured range for the QoE measurement and a required configuration parameter for the QoE measurement.

It is noted that, if the NG-RAN determines, according to the capability information, that the terminal device is incapable of performing the QoE measurement, the OAM device also transmits the configuration information for the QoE measurement to the core network device. That is, in a case where the NG-RAN determines, according to the capability information, that the terminal device is incapable of performing the QoE measurement, S102-S103 continue to be performed, but S104-S108 would no longer be performed.

In S103, the core network device transmits QoE measurement activation information to the NG-RAN. Correspondingly, the NG-RAN receives the QoE measurement activation information from the core network device.

Herein, the QoE measurement activation information includes the configuration parameter for the QoE measurement.

In a possible implementation, the QoE measurement activation information may be QoE measurement activation (Activate QoE Measurement) information transmitted by the core network device to the NG-RAN.

It is noted that, after receiving the configuration information for the QoE measurement from the OAM device, the core network device generates the QoE measurement activation information according to the configuration information for the QoE measurement.

In S104, the NG-RAN transmits radio resource control information to the AS of the terminal device. Correspondingly, the AS of the terminal device receives the radio resource control information from the NG-RAN.

Herein, the radio resource control information includes the configuration parameter for the QoE measurement.

It is noted that, the radio resource control information is transmitted by the NG-RAN to the terminal device in the form of a radio resource control signaling.

In a possible implementation, the radio resource control information may be a radio resource control (RRC) message transmitted by the NG-RAN to the AS of the terminal device.

Optionally, the NG-RAN may generate the radio resource control information based on the configuration parameter for the QoE measurement included in the QoE measurement activation information and based on its own required parameter for the QoE measurement, and transmit the generated information to the AS of the terminal device, so that the terminal device may perform a measurement based on the two kinds of QoE measurement parameters. In this way, the QoE measurement report generated by the terminal device may be used for the optimization of both the OAM and NG-RAN.

In S105, the AS of the terminal device transmits a mobile terminal command to an application (APP) layer of the terminal device. Correspondingly, the APP layer of the terminal device receives the mobile terminal command from the AS of the terminal device.

Herein, the mobile terminal command includes the configuration parameter(s) for the QoE measurement.

In a possible implementation, the mobile terminal command may be an Access Terminate command.

In S106, the APP layer of the terminal device transmits a mobile terminal command to the AS of the terminal device. Correspondingly, the AS of the terminal device receives this mobile terminal command from the APP layer of the terminal device.

The mobile terminal command here indicates that the APP layer of the terminal device reports the QoE measurement report to the AS of the terminal device.

In a possible implementation, the mobile terminal command may be an Access Terminate command.

It is noted that, after the APP layer of the terminal device receives the mobile terminal command including the configuration parameter(s) for the QoE measurement transmitted from the AS of the terminal device, the terminal device performs the QoE measurement according to the QoE measurement configuration parameter(s), and generates a QoE measurement report.

In S107, the AS of the terminal device transmits radio resource control information to the NG-RAN. Correspondingly, the NG-RAN receives the radio resource control information from the AS of the terminal device.

The radio resource control information here includes the QoE measurement report.

In a possible implementation, the radio resource control information may be a RRC Message transmitted by the AS of the terminal device to the NG-RAN.

In S108, the NG-RAN transmits the QoE measurement report to a terminal control element (TCE)/ media access control element (MCE). Correspondingly, the TCE/MCE receives the QoE measurement report from the NG-RAN.

In a possible implementation, the configuration information for the QoE measurement may be a QoE measurement report (QoE Report) transmitted by the NG-RAN to the TCE/MCE.

The process of the signaling-based QoE measurement is described in details above. The management-based QoE measurement is explained in details below.

### 1.2 Management-based QoE Measurement

The management-based QoE measurement refers to a QoE measurement performed on all terminal devices connected to a specific NG-RAN, and the management-based QoE measurement is mostly used in a post-processing stage (i.e., the next stage after the pre-processing stage is completed).

As shown in FIG. 2, a process of the management-based QoE measurement includes S201-S207 as follows.

In S201, an AS of a terminal device transmits capability information to a NG-RAN. Correspondingly, the NG-RAN receives the capability information transmitted from the AS of the terminal device.

It is noted that, S201 is similar to S101, and it may be understood by referring to S101, which will not be repeated herein.

In S202, the OAM device transmits QoE measurement activation information to the NG-RAN. Correspondingly, the NG-RAN receives the QoE measurement activation information from the OAM device.

Herein, the QoE measurement activation information carries a configuration parameter for a QoE measurement.

In a possible implementation, the QoE measurement activation information may be QoE measurement activation (Activate QoE Measurement) information transmitted by the OAM device to the NG-RAN.

It is noted that the difference between S202 and S102 lies in that: in S202, the QoE measurement activation information may be transmitted from the OAM device directly to the NG-RAN, whereas in S102, the configuration information for the QoE measurement is first transmitted by the OAM device to the core network device, such that the core network device then generates the QoE measurement activation information according to the configuration information for the QoE measurement, and transmits the QoE measurement activation information to the NG-RAN. Since the management-based QoE measurement does not require the core network device to relay the information, the QoE measurement activation information may be transmitted directly from the OAM device to the NG-RAN.

In S203, the NG-RAN transmits radio resource control information to the AS of the terminal device. Correspondingly, the AS of the terminal device receives the radio resource control information from the NG-RAN.

It is noted that, S203 is similar to S104, and it may be understood by referring to S104, which will not be repeated herein.

In S204, the AS of the terminal device transmits a mobile terminal command to the APP layer of the terminal device. Correspondingly, the APP layer of the terminal device receives the mobile terminal command from the AS of the terminal device.

It is noted that, S204 is similar to S105, and it may be understood by referring to S105, which will not be repeated herein.

In S205, the APP layer of the terminal device transmits a mobile terminal command to the AS of the terminal device. Correspondingly, the AS of the terminal device receives this mobile terminal command from the APP layer of the terminal device.

It is noted that, S205 is similar to S106, and it may be understood by referring to S106, which will not be repeated herein.

In S206, the AS of the terminal device transmits radio resource control information to the NG-RAN. Correspondingly, the NG-RAN receives the radio resource control information from the AS of the terminal device.

It is noted that, S206 is similar to S107, and it may be understood by referring to S107, which will not be repeated herein.

In S207, the NG-RAN transmits a QoE measurement report to a TCE/MCE. Correspondingly, the TCE/MCE receives the QoE measurement report from the NG-RAN.

It is noted that, S207 is similar to S108, and it may be understood by referring to S108, which will not be repeated herein.

### II. Configuration process of a secondary node

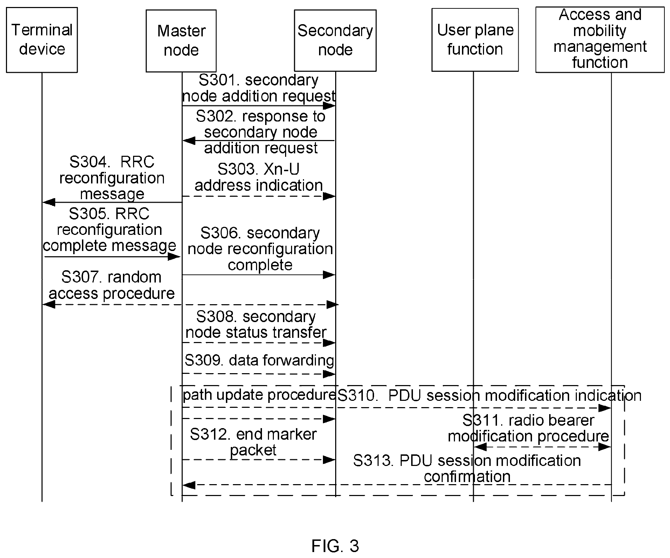

As shown in FIG. 3, the configuration process of the secondary node may include S301-S313 as follows.

In S301, an MN transmits a secondary node addition request to an SN. Correspondingly, the SN receives the secondary node addition request from the MN.

In a possible implementation, the secondary node addition request may be an SN Addition Request transmitted by the MN to the SN.

In S302, the SN transmits, to the MN, a response to the secondary node addition request. Correspondingly, the MN receives, from the SN, the response to the secondary node addition request.

In a possible implementation, the response to the secondary node addition request may be SN Addition Request Acknowledge transmitted by the SN to the MN.

Optionally, in S303, the MN transmits an Xn-U address indication to the SN. Correspondingly, the SN receives the Xn-U address indication from the MN.

In a possible implementation, the Xn-U address indication may be an Xn-U Address Indication transmitted by the MN to the SN.

In S304, the MN transmits a radio resource control reconfiguration message to a terminal device. Correspondingly, the terminal device receives the radio resource control reconfiguration message from the MN.

In a possible implementation, the radio resource control reconfiguration message may be an RRC reconfiguration message transmitted by the MN to the terminal device.

In S305, the terminal device transmits a radio resource control reconfiguration complete message to the MN. Correspondingly, the MN receives the radio resource control reconfiguration complete message from the terminal device.

In a possible implementation, the radio resource control reconfiguration complete message may be an RRC reconfiguration complete message transmitted by the MN to the terminal device.

In S306, the MN transmits secondary node reconfiguration complete information to the SN. Correspondingly, the SN receives the secondary node reconfiguration complete information from the MN.

In a possible implementation, the secondary node reconfiguration complete information may be SN Reconfiguration complete information transmitted by the MN to the SN.

The following steps S307-S313 are optional.

In S307, a random access procedure is performed between the terminal device and the SN.

In S308, the MN transmits secondary node status transfer to the SN. Correspondingly, the SN receives the secondary node status transfer from the MN.

In a possible implementation, the secondary node status transfer may be SN Status Transfer transmitted by the MN to the SN.

In S309, the MN transmits data forwarding to the SN. Correspondingly, the MN receives the data forwarding from the SN.

In a possible implementation, the data forwarding may be Data Forearding transmitted by the MN to the SN.

Optionally, a path update procedure may include S310-S313 as follows.

In S310, the MN transmits a protocol data unit session modification indication to an access and mobility management function (AMF). Correspondingly, the AMF receives the protocol data unit session modification indication from the MN.

In a possible implementation, the protocol data unit session modification indication may be a PDU Session Modification Indication transmitted by the MN to the AMF.

In S311, a radio bearer modification procedure is performed between the AMF and a user plane function (UPF).

In S312, the MN transmits an end marker packet to the SN. Correspondingly, the SN receives the end marker packet from the MN.

In a possible implementation, the end marker packet may be an End Marker Packet transmitted by the MN to the SN.

In S313, the AMF transmits a protocol data unit session modification confirmation to the MN. Correspondingly, the MN receives the protocol data unit session modification confirmation from the AMF.

In a possible implementation, the protocol data unit session modification confirmation may be a PDU Session Modification Confirmation transmitted by the AMF to the MN.

### III. A modification process of a secondary node

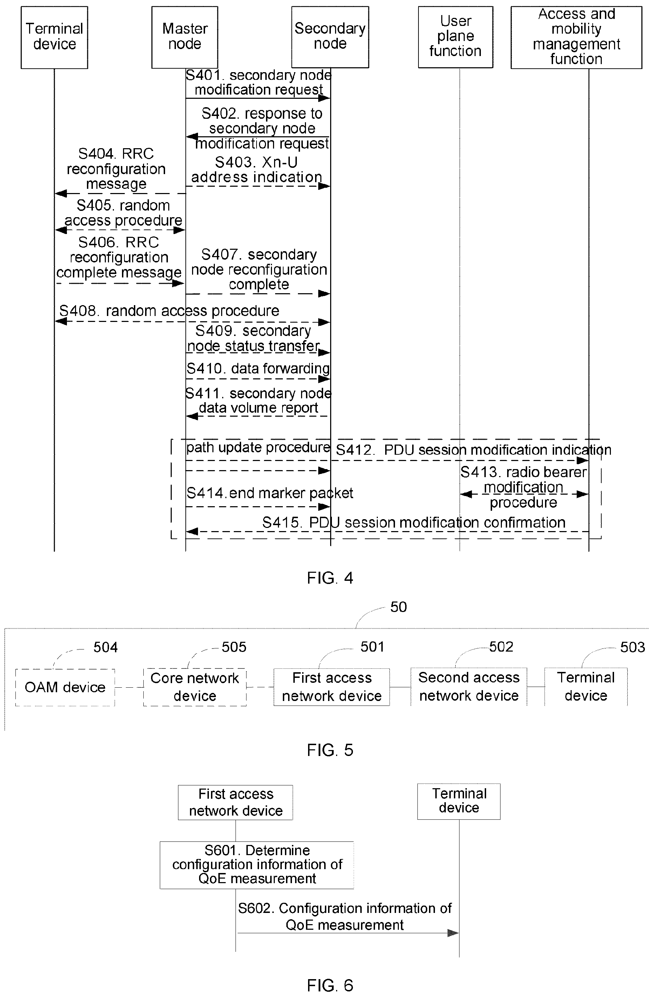

As shown in FIG. 4, the modification process of the secondary node may include S401-S415 as follows.

In S401, an MN transmits a secondary node modification request to an SN. Correspondingly, the SN receives the secondary node modification request from the MN.

In a possible implementation, the secondary node modification request may be an SN Modification Request transmitted by the MN to the SN.

It is noted that, the secondary node modification request may be understood by referring to the secondary node addition request in S301, which will not be repeated herein.

In S402, the SN transmits, to the MN, a response to the secondary node modification request. Correspondingly, the MN receives, from the SN, the response to the secondary node modification request.

In a possible implementation, the response to the secondary node modification request may be an SN Modification Request Acknowledge transmitted by the SN to the MN.

It is noted that, the response to the secondary node modification request may be understood by referring to the response to the secondary node addition request in S302, which will not be repeated herein.

Exemplarily, taking a case of modifying signaling radio bearer (SRB) 4 as an example, radio bearer reconfiguration (Radio Bearer Config) information in the response to the secondary node modification request may be:

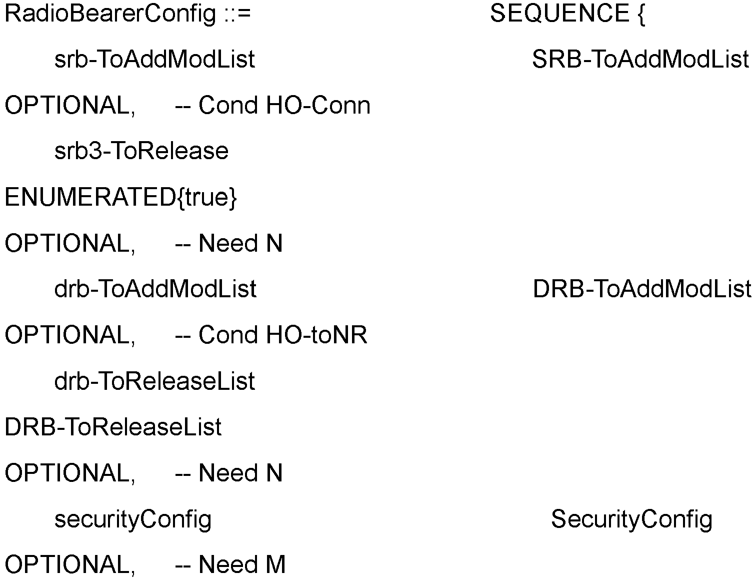

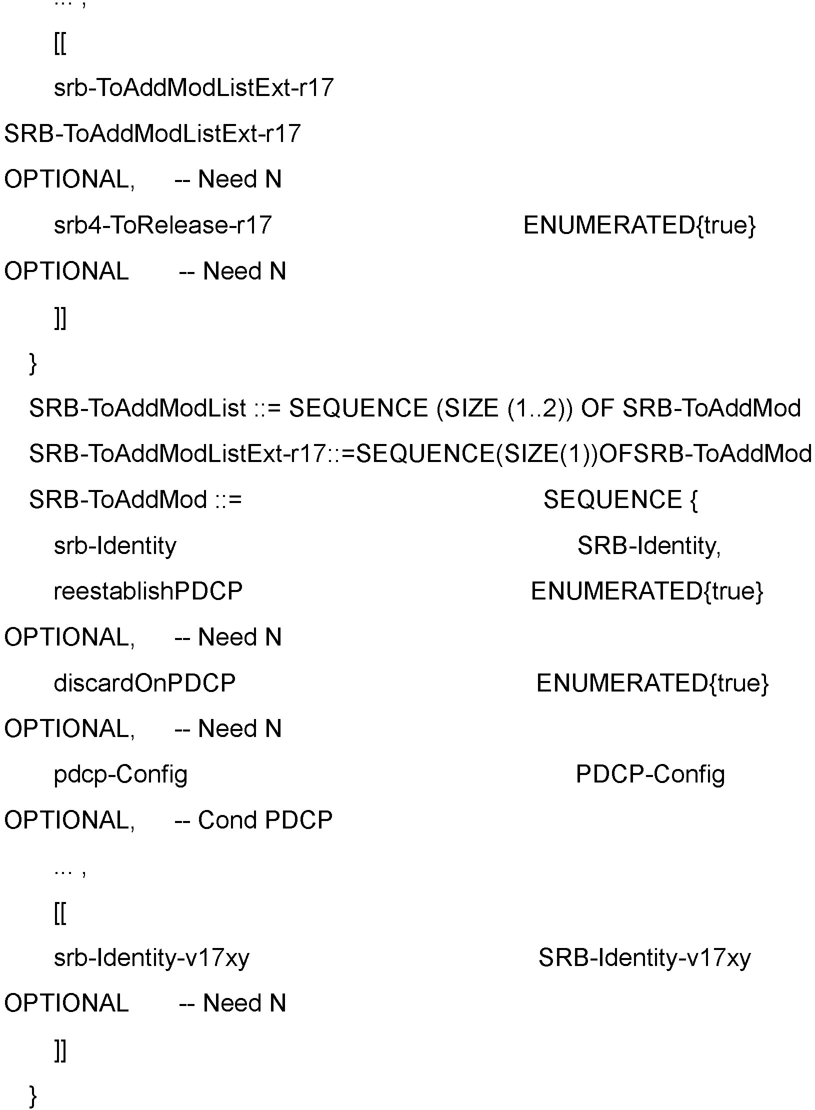

The following steps S403 to S415 are optional.

In S403, the MN transmits an Xn-U address indication to the SN. Correspondingly, the SN receives the Xn-U address indication from the MN.

In a possible implementation, the Xn-U address indication may be an Xn-U Address Indication transmitted by the MN to the SN.

In S404, the MN transmits a radio resource control reconfiguration message to a terminal device. Correspondingly, the terminal device receives the radio resource control reconfiguration message from the MN.

In a possible implementation, the radio resource control reconfiguration message may be an RRC reconfiguration message transmitted by the MN to the terminal device.

In S405, a random access procedure is performed between the terminal device and the MN.

In S406, the terminal device transmits a radio resource control reconfiguration complete message to the MN. Correspondingly, the MN receives the radio resource control reconfiguration complete message from the terminal device.

In a possible implementation, the radio resource control reconfiguration complete message may be an RRC reconfiguration complete message transmitted by the MN to the terminal device.

In S407, the MN transmits secondary node reconfiguration complete information to the SN. Correspondingly, the SN receives the secondary node reconfiguration complete information from the MN.

In a possible implementation, the secondary node reconfiguration completion may be SN Reconfiguration complete information transmitted by the MN to the SN.

In S408, a random access procedure is performed between the terminal device and the SN.

In S409, the MN transmits secondary node status transfer to the SN. Correspondingly, the SN receives the secondary node status transfer from the MN.

In a possible implementation, the secondary node status transfer may be SN Status Transfer transmitted by the MN to the SN.

In S410, the MN transmits data forwarding to the SN. Correspondingly, the MN receives the data forwarding from the SN.

In a possible implementation, the data forwarding may be Data Forearding transmitted by the MN to the SN.

In S411, the SN transmits a secondary node data volume report to the MN. Correspondingly, the MN receives the secondary node data volume report from the SN.

In a possible implementation, the secondary node data volume report may be a Secondary RAT Data Volume Report transmitted by the SN to the MN.

Optionally, a path update procedure may include S412-S415 as follows.

In S412, the MN transmits a protocol data unit session modification indication to an access and mobility management function (AMF). Correspondingly, the AMF receives the protocol data unit session modification indication from the MN.

In a possible implementation, the protocol data unit session modification indication may be a PDU Session Modification Indication transmitted by the MN to the AMF.

In S413, a radio bearer modification procedure is performed between the AMF and a user plane function (UPF).

In S414, the MN transmits an end marker packet to the SN. Correspondingly, the SN receives the end marker packet from the MN.

In a possible implementation, the end marker packet may be an End Marker Packet transmitted by the MN to the SN.

In S415, the AMF transmits a protocol data unit session modification confirmation to the MN. Correspondingly, the MN receives the protocol data unit session modification confirmation from the AMF.

In a possible implementation, the protocol data unit session modification confirmation may be a PDU Session Modification Confirmation transmitted by the AMF to the MN.

### IV. Radio bearer

The radio bearer is a channel on which the carried data or signaling is transmitted. The radio bearer may include an SRB and a data radio bearer (DRB). Herein, the SRB is used for signaling transmission, and the DRB is used for data transmission.

In an optional example, the SRB may include SRB1, SRB3 and SRB4. Different SRBs are used to carry different information, and these different SRBs are explained below, respectively.

Herein, the SRB1 may be used to transmit information (recorded as information #1) between the MN and the terminal device. Generally, this data may include a new radio (NR) RRC measurement report, RRC reconfiguration complete information, user equipment (UE) assistance information, failure information, etc. The information #1 has a high priority.

The SRB3 may be used to transmit information (recorded as information #2) between the SN and the terminal device. Generally, this information may include new radio master cell group failure information (NR MCG failure information) and etc. The information #2 has a high priority.

In a possible implementation, signaling information between the SN and the terminal device and signaling information between the MN and the terminal device may have a same priority.

The SRB4 may be used to transmit information (recorded as information #3) between the MN and the terminal device. Generally, this information may include information related to the QoE measurement for the MN (e.g., QoE measurement report), etc. Since the information related to the QoE measurement for the MN is generally used for network optimization of the MN, the information #3 has a low priority.

### V. Dual connectivity

The dual connectivity means that a terminal device may be connected to two access network devices (for example, an MN and an SN) simultaneously. In this case, the terminal device may simultaneously use services provided by the two access network devices.

Some concepts involved in the embodiments of the present disclosure are briefly introduced in the above.

As shown in FIG. 5, FIG. 5 shows a schematic diagram of a communication system 50 as provided by the embodiments of the present disclosure. The communication system 50 may include a first access network device 501, a second access network device 502, and a terminal device 503.

The first access network device 501 is located at an access network side of the communication system 50, and it is a device with wireless transmitting and receiving functions or a chip or a chip system provided in such device. The first access network device 501 includes, but is not limited to: an access point (AP) in a WiFi system, such as a home gateway, a router, a server, a switch, a bridge, etc.; an evolved NodeB (eNB); a radio network controller (RNC); a NodeB (NB); a base station controller (BSC); a base transceiver station (BTS); a home base station (e.g., a home evolved NodeB, or a home NodeB (HNB); a base band unit (BBU); a wireless relay node; a wireless backhaul node; a transmission and reception point (TRP); or a transmission point (TP), etc. The first access network device 50 may also be a 5G base station such as a gNB or a transmission point (TRP or TP) in the new radio (NR) system, or one antenna panel or a group of antenna panels (including a plurality of antenna panels) of a base station in the 5G system. Alternatively, it may also be a network node constituting a gNB or a transmission point, such as a baseband unit (BBU), or be a distributed unit (DU), a road side unit (RSU) with a base station function, or a 5G access network (NG radio access network, NG-Ran) device, etc. The first access network device 501 also includes base stations in different networking modes, such as a master evolved NodeB (MeNB) and a secondary eNB (SeNB, or secondary gNB (SgNB)). The first access network device 501 also has different types, such as a ground base station, an aerial base station, and a satellite base station. The second access network device 502 may be understood by referring to the description of the first access network device 501, which will not be repeated herein.

The terminal device 503 is a device with a wireless communication function. The terminal device 503 may be deployed on land, including indoors or outdoors, handheld or vehicle-mounted. The terminal device 503 may also be deployed on water (such as ships, etc.). The terminal device 503 may also be deployed in air (such as being deployed on an airplane, a balloon, and a satellite). The terminal device 503 is also referred to as a user equipment (UE), a mobile station (MS), a mobile terminal (MT) or a terminal, and it is a device that provides voice and/or data connectivity to users. For example, the terminal device 503 includes a handheld device, a vehicle-mounted device, etc. with a wireless connection function. At present, the terminal device 503 may be: a mobile phone, a tablet computer, a laptop computer, a personal digital assistant (PDA), a mobile internet device (MID), a wearable device (such as a smart watch, a smart bracelet, a pedometer, etc.), a vehicle-mounted device (such as a car, a bicycle, an electric car, an airplane, a ship, a train, a high-speed train, etc.), a virtual reality (VR) device, an augmented reality (AR) device, a wireless terminal in industrial control, a smart home device (such as a refrigerator, a television, an air conditioner and an electric meter), an intelligent robot, a workshop device, a wireless terminal in self-driving, a wireless terminal in remote medical surgery, a wireless terminal in smart grid, a wireless terminal in transportation safety, a wireless terminal in smart city, or a wireless terminal in smart home, a flying device (such as an intelligent robot, a hot air balloon, a drone, an airplane), etc. In a possible application scenario of the present disclosure, the terminal device is a terminal device that generally works on the ground, such as a vehicle-mounted device. In the present disclosure, for the sake of description, a chip deployed in the above-mentioned device, such as a system-on-a-chip (SOC), a baseband chip, etc., or other chips with a communication function may also be referred to as the terminal device 503.

Optionally, the terminal device 503 may be an embedded communication apparatus or a user's handheld communication device, including a mobile phone, a tablet computer, etc.

As an example, in the embodiments of the present disclosure, the terminal device 503 may also be a wearable device. The wearable device may also be referred to as a wearable smart device, which is a general term for wearable devices obtained by performing, with the wearable technology, intelligently design and development on daily wear, such as glasses, gloves, watches, clothing, and shoes. The wearable device is a portable device that is worn directly on the body or integrated into the user's clothing or accessories. The wearable device is not just a hardware device, and it implements powerful functions through software support, data interaction, and cloud interaction. The generalized wearable smart device includes those having comprehensive functions, large size, and capability of achieving complete or partial functions without relying on a smartphone, such as smart watches or smart glasses, as well as those only focusing on a certain type of application function and requiring cooperation with other devices such as smartphones, such as various smart bracelets and smart jewelry for vital sign monitoring.

The second access network device 502 is used to transmit configuration information to the first access network device.

In a possible implementation, the second access network device 502 may be an SN.

Herein, the configuration information indicates configuration information generated by the second access network device.

The first access network device 501 is configured to receive the configuration information from the second access network device, and transmit the configuration information to the terminal device.

In a possible implementation, the first access network device 501 may be an MN.

The terminal device 503 is configured to: determine whether the configuration information includes configuration information for a first radio bearer; and when it is determined that the configuration information includes the configuration information for the first radio bearer, establish the first radio bearer according to the configuration information for the first radio bearer, and transmit a first QoE measurement report to the second access network device 502 based on the first radio bearer.

In an optional implementation, the terminal device 503 may simultaneously use the service provided by the first access network device 501 and the service provided by the second access network device 502. Exemplarily, the terminal device 503 may perform wired communication with the first access network device 501 and the second access network device 502 via an optical cable. The terminal device 503 may also perform wireless communication with the first access network device 501 and the second access network device 502 via a radio bearer.

The second access network device 502 is further configured to receive the first QoE measurement report from the terminal device.

Optionally, after receiving the first QoE measurement report, the second access network device 502 may perform network optimization according to a parameter in the first QoE measurement report.

It is noted that, FIG. 5 illustrates only an exemplary framework diagram. The number of nodes shown in FIG. 5 is not limited. In addition to the functional nodes shown in FIG. 5, other nodes may also be included, such as an OAM device 504, and a core network device 505, and the present disclosure is not limited thereto.

The OAM device 504 refers to a functional network element that operates, manages, and maintains the communication network according to actual needs of the operator's network operation. Herein, the operation mainly refers to analysis, prediction, planning and configuration performed on services in the communication networks and communications. The management mainly refers to management and monitoring of data in the communication networks. The maintenance mainly refers to test and fault management performed on the services in communication networks and communications.

The OAM device 504 is configured to generate configuration information for a QoE measurement for the first access network device 501, and transmit, to the first access network device 501, the configuration information for the QoE measurement for the first access network device 501. The OAM device 504 is further configured to generate configuration information for a QoE measurement for the second access network device 502, and transmit, to the second access network device 502, the configuration information for the QoE measurement for the second access network device 502. Herein, the configuration information for the QoE measurement may be carried in QoE measurement activation information.

In a possible implementation, the OAM device 504 is connected to the first access network device 501 in a wireless manner. The first access network device 501 and the second access network device 502 may be connected to the terminal device 503 in a wired manner or in a wireless manner.

The core network device 505 may include at least one of the following network element function entities: an AMF, a session management function (SMF), a UPF, an authentication server function (AUSF), a network slice selection function (NSSF), a network exposure function (NEF), a policy control function (PCF), and a unified data management (UDM) function.

Herein, the specific functions of the above network element functional entities are as follows. The AMF is responsible for user's access and mobility management. The SMF is responsible for user's session management. The AUSF is responsible for authenticating 3GPP access and non-3GPP access of a user. The UPF is responsible for user plane processing. The NSSF is responsible for selecting a network slice for a user service. The NEF is responsible for exposing the capabilities of the 5G network to external systems. The PCF is responsible for control over user's policy, including a session policy, a mobility policy, etc. The UDM is responsible for user's contract data management.

The communication system 50 provided in the embodiments of the present disclosure may be in various forms, such as: code division multiple access (CDMA), time division multiple access (TDMA), frequency division multiple access (FDMA), orthogonal frequency-division multiple access (OFDMA), single carrier frequency division multiple access (SC-FDMA) and other systems. The term "system" and "network" may be interchangeable. The CDMA system may implement wireless technologies, such as universal terrestrial radio access (UTRA) and CDMA 2000. The UTRA may include a wideband CDMA (WCDMA) technology and other CDMA variant technologies. The CDMA 2000 may cover the interim standard (IS) 2000 (IS-2000), IS-95 standard and IS-856 standard. The TDMA system may implement a wireless technology, such as global system for mobile communications (GSM). The OFDMA system may implement wireless technologies, such as evolved UTRA (E-UTRA), ultra mobile broadband (UMB), IEEE 802.11 (Wi-Fi), IEEE 802.16 (WiMAX), IEEE 802.20, and Flash OFDMA. The UTRA and the E-UTRA are UMTS and a evolved version of the UMTS, respectively. Versions of 3GPP in the long term evolution (LTE) and those versions based on the LTE evolution are new versions of UMTS using E-UTRA. 5G communication system and NR are communication systems currently under research. In addition, the communication system may also be applicable to future-oriented communication technologies, and are applicable to the technical solutions provided by the embodiments of the present disclosure.

Furthermore, the communication system described in the embodiments of the present disclosure are for the purpose of clearly explaining the technical solutions of the embodiments of the present disclosure, and do not constitute a limitation on the technical solutions provided by the embodiments of the present disclosure. The ordinary skilled in the art may know that, with the evolution of the network architectures and the emergence of new communication systems, the technical solutions provided by the embodiments of the present disclosure are also applicable for similar technical problems.

With the continuous development of communication systems, a terminal device may simultaneously use services provided by a plurality of access network devices (for example, an MN and an SN). In order to facilitate the MN to optimize its own network performance, the MN transmits a QoE measurement parameter required by itself to the terminal device, so that the terminal device may report a measurement result of the QoE measurement parameter required by the MN. In this way, the MN may perform network optimization according to the measurement result of the QoE measurement parameter required by the MN.

The SN also needs the measurement result of the QoE measurement parameter required by itself to perform the network optimization. Therefore, it is an urgent problem for those skilled in the art to enable the terminal device to acquire the QoE measurement parameter required by the SN.

In order to solve the above-mentioned problems in the prior art, the embodiments of the present disclosure proposes a QoE measurement method, which enables a terminal device to acquire the QoE measurement parameter required by the SN. As shown in FIG. 6, the method includes S601 to S602.

In S601, a first access network device determines configuration information for a QoE measurement.

Herein, the configuration information for the QoE measurement is used to instruct a terminal device to perform the QoE measurement. The configuration information for the QoE measurement includes an unencapsulated target QoE measurement parameter for optimizing the first access network device. The first access network device is an SN.

As an optional implementation, S601 is specifically implemented as follows: the first access network device may first acquire an identifier of the QoE measurement and a QoE measurement parameter set from a second access network device (for example, the MN), and then determine, based on its own network optimization requirements, the configuration information for the QoE measurement from the QoE measurement parameter set.

In a possible implementation, the configuration information for the QoE measurement further includes: configuration information for a third radio bearer. The third radio bearer is used to transmit the configuration information for the QoE measurement between the first access network device and the terminal device.

In combination with this implementation, after the terminal device receives the configuration information for the QoE measurement, the terminal device may establish the third radio bearer based on the configuration information for the third radio bearer included in the configuration information for the QoE measurement. As such, subsequent configuration information for the QoE measurement may be directly transmitted to the terminal device based on the third radio bearer.

Optionally, the third radio bearer may also be used to transmit a QoE measurement report between the terminal device and the first access network device.

It is noted that, the unencapsulated target QoE measurement parameter is a parameter capable of being directly acquired by the first access network device without decapsulation. Compared with a case of using an encapsulated target QoE measurement parameter, the unencapsulated target QoE measurement parameter used in the present disclosure enables the decapsulation procedure of the first access network device to be omitted.

In a possible implementation, the unencapsulated target QoE measurement parameter may be RAN visible QoE measurement configuration information.

In S602, the first access network device transmits the configuration information for the QoE measurement to the terminal device. Correspondingly, the terminal device receives the configuration information for the QoE measurement from the first access network device.

As a possible implementation, S602 is specifically implemented as follows: the first access network device directly transmits the configuration information for the QoE measurement to the terminal device, based on a radio bearer (denoted as a first radio bearer) between the first access network device and the terminal device.

As another possible implementation, S602 is specifically implemented as follows: the first access network device transmits the configuration information for the QoE measurement to the second access network device. Correspondingly, the second access network device receives the configuration information for the QoE measurement from the first access network device. The second access network device may transmit the configuration information for the QoE measurement to the terminal device based on a radio bearer (denoted as a second radio bearer) between the second access network device and the terminal device.

Optionally, after receiving the configuration information for the QoE measurement from the first access network device, the terminal device may perform the QoE measurement based on the target QoE measurement parameter included in the configuration information for the QoE measurement, and generate a QoE measurement report. The QoE measurement report may include a measurement result of the target QoE measurement parameter and the identifier of the QoE measurement. The terminal device may transmit the QoE measurement report to the first access network device. Correspondingly, the first access network device receives the QoE measurement report from the terminal device. After the first access network device receives the QoE measurement report from the terminal device, the first access network device may perform network optimization on itself based on the QoE measurement report.

The above technical solution brings about at least beneficial effects as follows. In the QoE measurement method provided by the present disclosure, the first access network device (i.e., SN) determines the configuration information for a QoE measurement (the configuration information for the QoE measurement is used to instruct the terminal device to perform the QoE measurement), and the configuration information for the QoE measurement includes an unencapsulated target QoE measurement parameter for optimizing the first access network device. After the first access network device determines the configuration information for the QoE measurement, the first access network device transmits the configuration information for the QoE measurement to the terminal device, so that the terminal device may acquire the unencapsulated target QoE measurement parameter for optimizing the first access network device (i.e., SN) included in the configuration information for the QoE measurement.

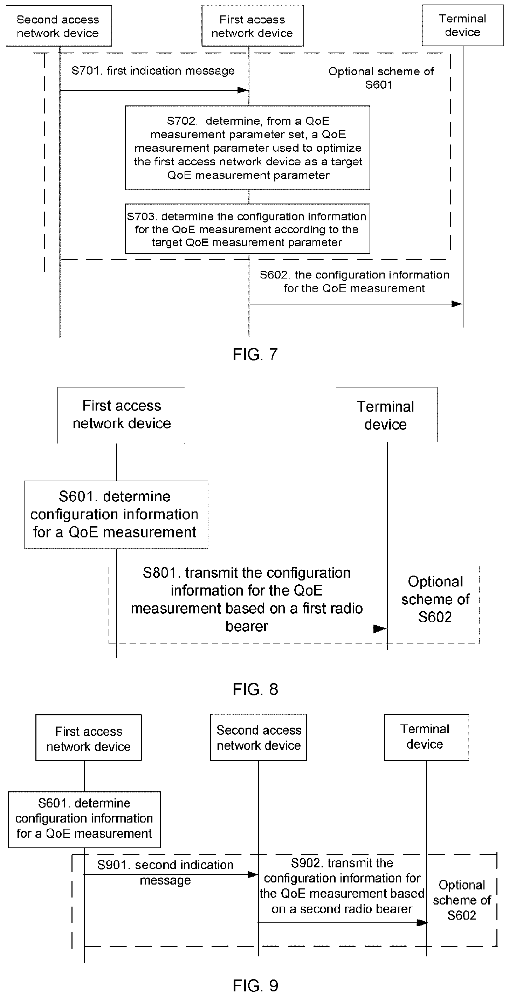

In an optional embodiment, as shown in S601, the first access network device determines the configuration information for the QoE measurement. Therefore, this embodiment provides a possible particular implementation based on the method embodiment shown in FIG. 6. In combination with FIG. 6, as shown in FIG. 7, the first access network device may specifically determine the configuration information for the QoE measurement through S701-S703 as follows.

In S701, the second access network device transmits a first indication message to the first access network device. Correspondingly, the first access network device receives the first indication message from the second access network device.

Herein, the first indication message includes an identifier of the QoE measurement and a QoE measurement parameter set. The QoE measurement parameter set includes at least one unencapsulated QoE measurement parameter. It is noted that, the at least one unencapsulated QoE measurement parameter includes the unencapsulated target QoE measurement parameter.

As an optional implementation, the identifier of the QoE measurement may be represented by a QoE reference. One QoE reference may be used to indicate the identifier of one QoE measurement. Specifically, the OAM device configures a corresponding one QoE reference for each of a plurality of QoE measurements, and transmits the QoE reference corresponding to each of the plurality of QoE measurements to the first access network device and the second access network device. As such, the first access network device may determine a unique QoE measurement based on the QoE reference.

The QoE measurement parameter set is a set of parameters that are all or part of parameters available for optimization and configured by the OAM device for a plurality of access network devices. The plurality of access network devices include the first access network device and the second access network device. Each one in the all or part of parameters mentioned above is an unencapsulated parameter, which can be conveniently acquired by the plurality of access network devices directly without decapsulation, thereby omitting the acquisition step.

In a possible implementation, the QoE measurement parameter set may include available RAN visible QoE metrics.

Optionally, before S701, the OAM device may determine the QoE measurement that is to be configured and a set of parameters that are all or part of parameters available for optimization of the access network devices(i.e., the QoE measurement parameter set), determine activation configuration information according to the identifier of the QoE measurement to be configured and the QoE measurement parameter set, and transmit the activation configuration information to the second access network device. Correspondingly, the second access network device receives the activation configuration information from the OAM device, and generates the first indication message according to the activation configuration information.

In a feasible implementation, the activation configuration information may be first transmitted from the OAM device to the core network device, and then forwarded from the core network device to the second access network device. In this case, the QoE measurement is a signaling-based QoE measurement, and the activation configuration information may be carried in the configuration information for the QoE measurement (Configure QoE Measurement information) mentioned in S102 and the QoE measurement activation information (Activate QoE Measurement information) mentioned in S103.

In another feasible implementation, the activation configuration information may be transmitted directly by the OAM device to the second access network device. In this case, the QoE measurement is a management-based QoE measurement, and the activation configuration information may be carried in the QoE measurement activation information (Activate QoE Measurement information) mentioned in S202.

In a possible implementation, the first indication message further includes at least one of an internet protocol address of a QoE measurement collection entity, a service type of the QoE measurement, and a type of the QoE measurement.

As a possible implementation, the type of the QoE measurement may be a QoE measurement type.

As a possible implementation, the internet protocol address of the QoE measurement collection entity may be a measurement collection entity internet protocol (IP) address.

As a possible implementation, the service type of the QoE measurement may be a service type, which is used to indicate the type of service measured in the QoE measurement. In an example, the type of service may include at least one of a video service, a voice service, and a broadcast service, which is only an exemplary explanation for the service type. The service type may also include other types of services (e.g., a fax service), and the present disclosure is not limited thereto.

In a possible implementation, the first indication message is carried in secondary node-terminal device application layer measurement reconfiguration information (S-NG-RAN node UE Application Layer Measurement Configuration Information). The S-NG-RAN node UE Application Layer Measurement Configuration Information is carried in secondary node quality management control reconfiguration information (S-NG-RAN node QMC Configuration Information). The S-NG-RAN node QMC Configuration Information is carried in secondary node addition request (S-NODE ADDITION REQUEST) or secondary node modification request (S-NODE MODIFICATION REQUEST). The configuration information for the QoE measurement is carried in secondary node to master node container (S-NG-RAN node to M-NG-RAN node Container) information. The S-NG-RAN node to M-NG-RAN node Container information is carried in the response to the secondary node addition request (S-NODE ADDITION REQUEST ACKNOWLEDGE) or the response to the secondary node modification request (S-NODE MODIFICATION REQUEST ACKNOWLEDGE).

Exemplarily, as shown in Table 1 below, the first indication message may include: the identifier (QoE Reference) of the QoE measurement, the service type, the service type of the QoE measurement, the type of the QoE measurement, and the QoE measurement parameter set (Available RAN Visible QoE Metrics). As shown in Table 1 below, the first indication message also includes corresponding references and ranges of a plurality pieces of information included in the first indication message.

**Table 1**

| IE/Group Name | Presence | Range |
|---|---|---|
| QoE Reference | M | |
| Service Type | M | |
| QoE Measurement Type | O | |
| Measurement Collection Entity IP Address | | |
| Available RAN Visible QoE Metrics | O | |

In S702, the first access network device determines, from the QoE measurement parameter set, a QoE measurement parameter for optimizing the first access network device as a target QoE measurement parameter.

As an optional implementation, S702 may be specifically implemented as follows: the first access network device acquires all or part of performance parameters of the first access network device from a network management device side, and determines, from these acquired performance parameters, a performance parameter reflecting poor performance. The first access network device determines, from the QoE measurement parameter set, a parameter the same as the performance parameter reflecting poor performance as the target QoE measurement parameter.

Optionally, the first access network device may also consider the service type of the QoE measurement when determining the target QoE measurement parameter. For example, in a case where the service type of the QoE measurement is a video service, the first access network device may select a parameter related to the video service (e.g., the number of times that video lag appears) from the QoE measurement parameter set, so that the QoE measurement may better adapt to the service requirement.

In an example, the target QoE measurement parameter may include at least one of: a packet loss rate, a dropping rate, an access success rate, etc. This is only an exemplary description of the target QoE measurement parameter. The target QoE measurement parameter may also include other parameters (e.g., delay), and the present disclosure is not limited thereto.

In S703, the first access network device determines the configuration information for the QoE measurement according to the target QoE measurement parameter.

In a possible implementation, the configuration information for the QoE measurement may further include: the identifier of the QoE measurement, the type of the QoE measurement, and the service type of the QoE measurement. Regarding the description of the identifier of the QoE measurement, the type of the QoE measurement, and the service type of the QoE measurement, reference may be made to the corresponding description in the above, which will not be repeated herein.

The above technical solution brings about at least beneficial effects as follows. In the QoE measurement method provided by the present disclosure, the first access network device first acquires the first indication message from the second access network device side, and then the first access network device may acquire the QoE measurement parameter set, and determine the target QoE measurement parameter from the QoE measurement parameter set. After the first access network device determines the target QoE measurement parameter, the configuration information of the QoE measurement is determined according to the target QoE measurement parameter. This supports the subsequent transmission of the configuration information for the QoE measurement from the first access network device to the terminal device, and enables the terminal device to receive the configuration information for the QoE measurement from the first access network device.

In an optional embodiment, as shown in S602, the first access network device transmits the configuration information for the QoE measurement to the terminal device. Regarding the operation of the first access network device transmitting the configuration information for the QoE measurement to the terminal device, there may be two cases: case 1, the first access network device directly transmits the configuration information for the QoE measurement to the terminal device; and case 2, the first access network device transmits the configuration information for the QoE measurement to the terminal device via the second access network device. In different cases, there are different implementations for the first access network device to transmit the configuration information for the QoE measurement to the terminal device, which will be illustrated below with respect to case 1 and case 2.

Case 1: the first access network device transmits directly the configuration information for the QoE measurement to the terminal device.

In case 1, in combination with FIG. 6, as shown in FIG. 8, the operation of the first access network device transmitting the configuration information for the QoE measurement to the terminal device may be specifically implemented through S801.

In S801, the first access network device transmits the configuration information for the QoE measurement to the terminal device, based on a first radio bearer. Correspondingly, the terminal device may receive the configuration information for the QoE measurement from the first access network device based on the first radio bearer.

Herein, the first radio bearer is used to transmit information between the first access network device and the terminal device.

In an example, the first radio bearer may be SRB3. This is only an exemplary description of the first radio bearer, and the first radio bearer may be other radio bearers (e.g., SRB5) for transmitting information between the first access network device and the terminal device, and the present disclosure is not limited thereto.

In combination with the above example, a possible implementation of S801 may be that: the first access network device transmits the configuration information for the QoE measurement to the terminal device based on the SRB3. Correspondingly, the terminal device may receive the configuration information for the QoE measurement from the first access network device based on the SRB3.

In an optional embodiment, the first radio bearer used to transmit the configuration information for the QoE measurement is the SRB3 of the first radio bearer.

Optionally, the solution (i.e., the solution shown in FIG. 8) in case 1 may be applied to a scenario where there is the first radio bearer but no second radio bearer or no third radio bearer in the communication system, and may also be applied to a scenario where there is not only the first radio bearer but also a second radio bearer or a third radio bearer in the communication system. The present disclosure is not limited thereto.

Case 2: the first access network device transmits the configuration information for the QoE measurement to the terminal device via the second access network device.

In case 2, in combination with FIG. 6, as shown in FIG. 9, the operation of the first access network device transmitting the configuration information for the QoE measurement to the terminal device may be specifically implemented through S901-S902.

In S901, the first access network device transmits a second indication message to the second access network device. Correspondingly, the second access network device may receive the second indication message from the first access network device.

Herein, the second indication message is configured to instruct the second access network device to transmit, based on a second radio bearer, the configuration information for the QoE measurement to the terminal device.

In a possible implementation, the second indication message may include: an identifier of the second radio bearer (for example, an identifier of the SRB1 or an identifier of the SRB4), and the configuration information for the QoE measurement. As such, after receiving the second indication message, the first access network device transmits the configuration information for the QoE measurement to the second access network device based on the second radio bearer.

In an optional embodiment, the second radio bearer used to transmit the configuration information for the QoE measurement is the SRB1 of the second radio bearer.

It is noted that, since the identifier of the second radio bearer and the configuration information for the QoE measurement are information configured by the first access network device (SN) for the terminal device, after the second access network device receives the second indication message, the second access network device transmits the configuration information for the QoE measurement to the terminal device based on the second radio bearer.

In a possible implementation, the second indication message may be carried in the S-NG-RAN node to M-NG-RAN node Container information. The S-NG-RAN node to M-NG-RAN node Container information is carried in the S-NODE ADDITION REQUEST ACKNOWLEDGE. Herein, the identifier of the second radio bearer may be carried in secondary cell group-resource block-reconfiguration (scg-RB-Config) information of the S-NG-RAN node to M-NG-RAN node Container information. The configuration information for the QoE measurement may be carried in secondary cell group-cell group reconfiguration (scg-CellGroupConfig) information of the S-NG-RAN node to M-NG-RAN node Container information.

In another possible implementation, the second indication message may be carried in the S-NG-RAN node to M-NG-RAN node Container information. The S-NG-RAN node to M-NG-RAN node Container information is carried in the S-NODE MODIFICATION REQUEST ACKNOWLEDGE. The relevant information may be understood by referring to contents mentioned above, which will not be repeated herein.

Exemplarily, the S-NG-RAN node to M-NG-RAN node Container information may be: 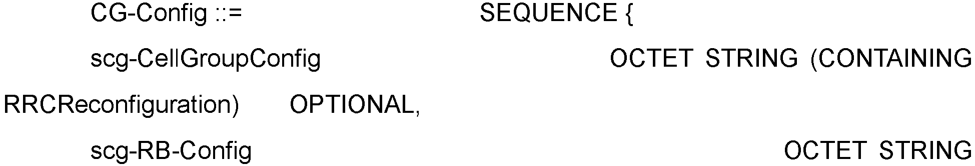 (CONTAINING RadioBearerConfig) OPTIONAL. It is noted that, the configuration information for the QoE measurement may be understood by referring to the description of the corresponding contents mentioned above, which will not be repeated herein.

In S902, the second access network device transmits the configuration information for the QoE measurement to the terminal device based on the second radio bearer.

Herein, the second radio bearer is used to transmit information between the second access network device and the terminal device.

In an example, the second radio bearer may be the SRB1. This is only an exemplary description of the first radio bearer, the second radio bearer may be other radio bearers (e.g., SRB4) for transmitting information between the second access network device and the terminal device, and the present disclosure is not limited thereto.

In combination with this example, a possible implementation of S902 may be that: the second access network device transmits the configuration information for the QoE measurement to the terminal device based on the SRB1. Correspondingly, the terminal device may receive the configuration information for the QoE measurement from the second access network device based on the SRB1.

In a possible implementation, the configuration information for the QoE measurement transmitted from the second access network device to the terminal device may be carried in SCG configuration information.

Exemplarily, the SCG configuration information may be:

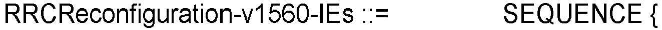

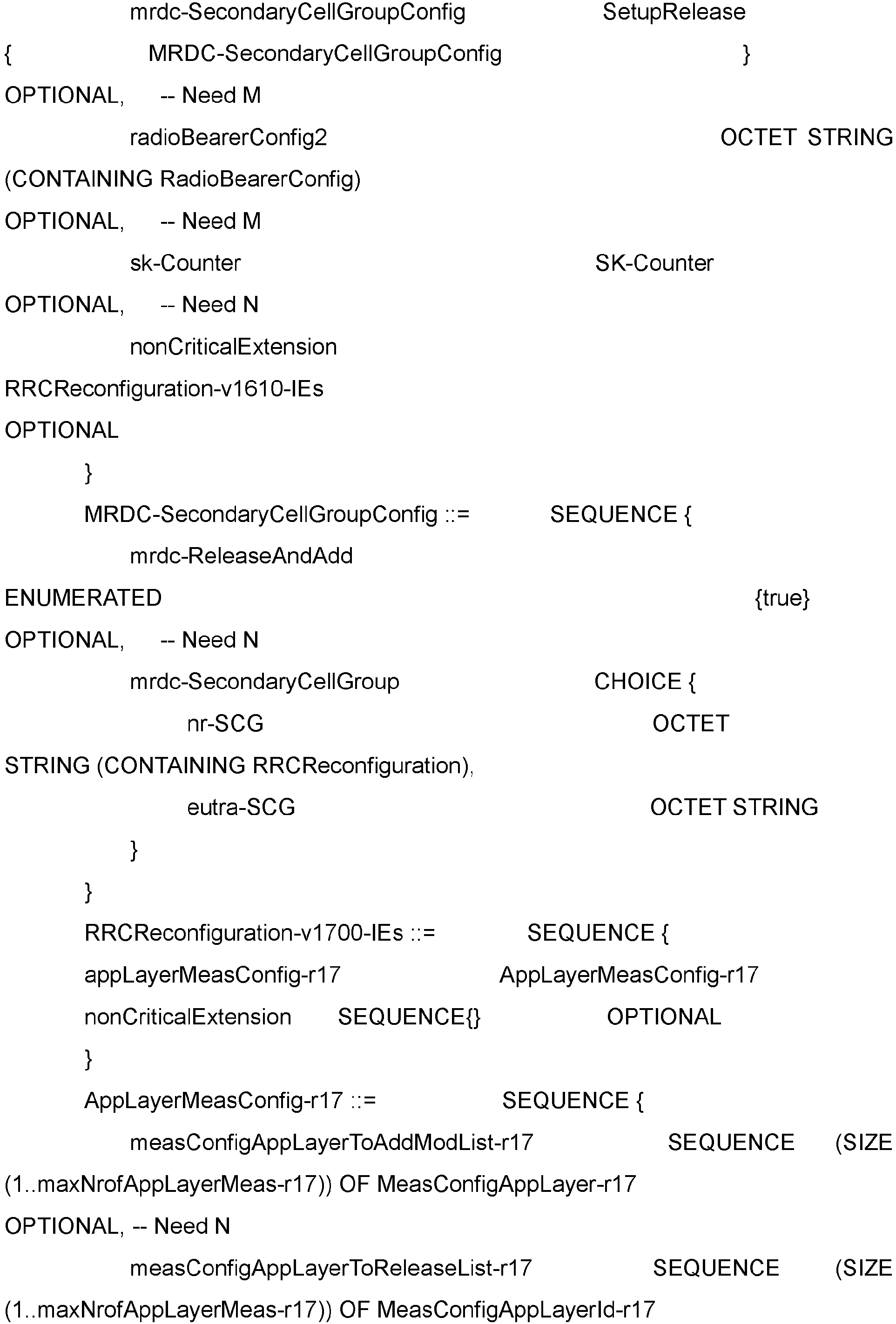

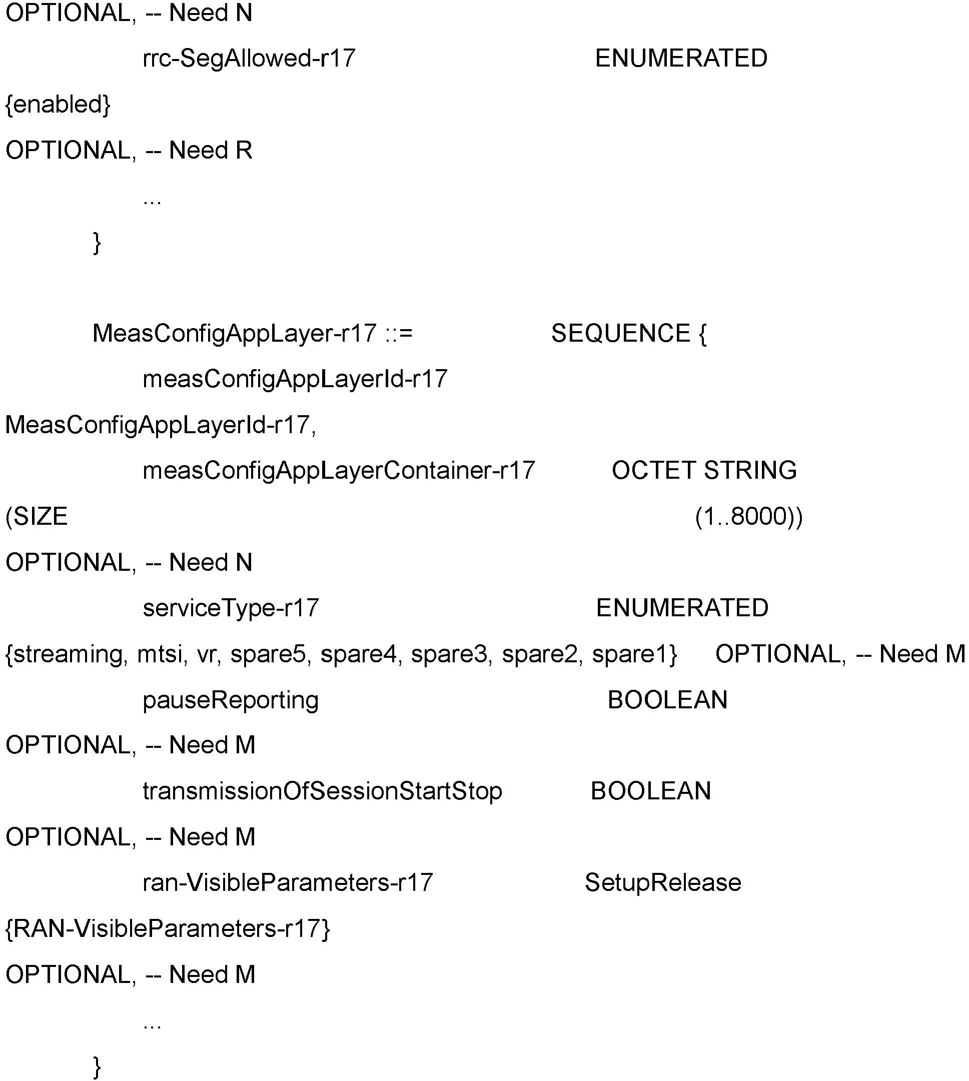

Optionally, the solution (i.e., the solution shown in FIG. 9) in case 2 may be applied to a scenario there is the second radio bearer but no first radio bearer or no third radio bearer in the communication system, and may also be applied to a scenario there is not only the second radio bearer but also the first radio bearer or the third radio bearer in the communication system. The present disclosure is not limited thereto.

The above technical solutions bring about at least beneficial effects as follows. In the QoE measurement method provided by the present disclosure, the first access network device may transmit directly the configuration information for the QoE measurement to the terminal device based on the first radio bearer, or may also transmit the configuration information for the QoE measurement to the terminal device through the second access network device. Specifically, the first terminal device first transmits the configuration information for the QoE measurement to the second access network device, and then the second access network device transmits the configuration information for the QoE measurement to the terminal device based on the second radio bearer. In this way, the present disclosure provides multiple ways for the first access network device to transmit the configuration information for the QoE measurement to the terminal device, so that the first access network device may transmit the configuration information for the QoE measurement to the terminal device in multiple cases.

In a possible implementation, the activation configuration information may be carried in terminal device application layer measurement information (UE Application Layer Measurement Information). Exemplarily, as shown in Table 2 below, the UE Application Layer Measurement Information may include following information: a QoE reference, the service type of the QoE measurement, a choice area scope of quality management control (CHOICE Area Scope of QMC), the measurement collection entity internet protocol address (Measurement Collection Entity IP Address), a QoE measurement status, information on a container for application layer measurement reconfiguration, a measurement reconfiguration application layer identifier (Measurement Configuration Application Layer ID), a slice support list for quality management control (Slice Support List for QMC), CHOICE MDT Alignment Information, and the access network device visible QoE parameter set (Available RAN Visible QoE Metrics).

Herein, the choice area scope of QMC may include: cell based, tracking area based (TA based), tracking area identity based (TAI based), and public land mobile network area based (PLMN area based). The cell based may include: a cell ID list for quality management control (Cell ID List for QMC), and the cell ID list for QMC may include an access network device common gateway interface (NG-RAN CGI). The tracking area based may include: a tracking area list for QMC (TA List for QMC), and the tracking area list for QMC may include a tracking area code (TAC). The tracking area identity based may include: a tracking area identity list for QMC (TAI List for QMC), and the tracking area identity list for QMC may include tracking area identity (TAI). The public land mobile network area based may include a PLMN List for QMC, and the PLMN List for QMC may include a public land mobile network identifier (PLMN ID).

The slice support list for quality management control may include: slice support quality management control item (Slice Support QMC Item), and the slice support QMC item may include single slice identifier (S-NSSAI).

The CHOICE MDT Alignment information may include S-based MDT, and the S-based MDT may include a tracking identifier of an access network device (NG-RAN Trace ID).

It is noted that, Table 2 illustrated below also shows the presence, range, Internet explorer type and reference (IE type and reference), and semantics description of each piece of information included in the terminal device application layer measurement information. For the information in Table 2 below, reference may be made to the prior art, which will not be repeated herein.

**Table 2**

| IE/Group Name | Presence | Range | IE type and reference | Semantics description |
|---|---|---|---|---|
| QoE Reference | M | | OCTET STRING (SIZE(6)) | QoE Reference, as defined in clause 5.2 of TS 28.405 [x]. It consists of MCC + MNC + QMC ID, where the MCC and MNC are coming with the trace activation request from the management system to identify one PLMN containing the management system, and QMC ID is a 3-bytes Octet String. |
| Service Type | M | | ENUMERATED (QMC for DASH streaming, QMC for MTSI, QMC for VR, ...) | This IE indicates the service type of QoE measurements. |
| CHOICE Area Scope of QMC | M | | | |
| >Cell based | | | | |
| >>Cell ID List for QMC | | 1 .. <maxno ofCellID forQMC > | | |
| >>>NG-RAN CGI | M | | 9.3.1.73 | |
| >TA based | | | | |
| >>TA List for QMC | | 1 .. <maxno ofTAfor QMC> | | |
| >>>TAC | M | | 9.3.3.10 | The TAI is derived using the current serving PLMN. |
| >TAI based | | | | |
| >>TAI List for QMC | | 1 .. <maxno ofTAfor QMC> | | |
| >>>TAI | M | | 9.3.3.11 | |
| >PLMN area based | | | | |
| >>PLMN List for QMC | | 1 .. <maxno ofPLMN forQMC > | | |
| >>>PLMN Identity | M | | 9.3.3.5 | |
| Measurement Collection Entity IP Address | M | | Transport Layer Address 9.3.2.4 | The IP address of the entity receiving the QoE measurement report. |
| QoE Measurement Status | O | | ENUMERATED (ongoing, ...) | Indicates whether the QoE measurement has been started. Present in case of NG-based handover for signalling-based QMC measurement. |
| Container for Application Layer Measurement Configuration | O | | OCTET STRING (SIZE(1.. 8000)) | Contains application layer measurement configuration, see Annex L in 26.247 [xx]. |
| | | | | Present in case of initial QoE configuration, and shall be included in Source to Target Transparent Container for signalling-based QMC during NG-based handover IE. |
| Measurement Configuration Application Layer ID | O | | INTEGER (0..61, ...) | This IE is present only when the message containing it is NG-based handover related. The IE indicates the identity of the application layer measurement configuration, as defined in TS 38.331 [18]. |
| Slice Support List for QMC | | 0..1 | | |
| >Slice Support QMC Item | | 1 .. < maxnoo fSNSSA IforQMC > | | |
| >>S-NSSAI | M | | 9.3.1.24 | |
| CHOICE MDT Alignment Information | O | | | Indicates the MDT measurements with which alignment is required. |
| >S-based MDT | | | | |
| >>NG-RAN Trace ID | M | | OCTET STRING (SIZE(8)) | This IE is composed of the following: Trace Reference defined in TS 32.422 [11] (leftmost 6 octets, with PLMN information encoded as in 9.3.3.1), and Trace Recording Session Reference defined in TS 32.422 [11] (last 2 octets). |
| Available RAN Visible QoE Metrics | O | | 9.3.1.xx5 | Present in case of initial QoE configuration and in case of NG-based handover for signalling-based QoE measurement. |

In an example, as shown in Table 3 below, the secondary node addition request may include the following information: a Message Type, an identifier of the terminal device on the Xn interface within the master node scope (M-NG-RAN node UE XnAP ID), UE Security Capabilities, S-NG-RAN node Security Key, S-NG-RAN node UE Aggregate Maximum Bit Rate, Selected PLMN, Mobility Restriction List, Index to RAT/Frequency Selection Priority, PDU Session Resources To Be Added List, M-NG-RAN node to S-NG-RAN node Container information, an identifier of the terminal device on the Xn interface within the secondary node scope (S-NG-RAN node UE XnAP ID), Expected UE Behaviour, Requested Split SRBs, PCell ID, Desired Activity Notification Level, Available DRB IDs, S-NG-RAN node Maximum Integrity Protected Data Rate Uplink, S-NG-RAN node Maximum Integrity Protected Data Rate Downlink, Location Information at S-NODE reporting, MR-DC Resource Coordination Information, Masked IMEISV, NE-DC TDM Pattern, SN Addition Trigger Indication, Trace Activation, Requested Fast MCG recovery via SRB3, UE Radio Capability ID, and S-NG-RAN node QMC Configuration Information.

It is noted that, in the present disclosure, the secondary node QoE configuration information is added to the secondary node addition request which is used to carry the S-NG-RAN node UE Application Layer Measurement Configuration Information, and the S-NG-RAN node UE Application Layer Measurement Configuration Information is used to carry the first indication message.

As can be seen from Table 3 below, Table 3 also shows the presence and range of each piece of information included in the secondary node addition request. For information other than the secondary node QoE configuration information in Table 3 below, reference may be made to the prior art, which will not be repeated herein.

**Table 3**

| IE/Group Name | Presence | Range |
|---|---|---|
| Message Type | M | |
| M-NG-RAN node UE XnAP ID | M | |
| UE Security Capabilities | M | |
| S-NG-RAN node Security Key | M | |
| S-NG-RAN node UE Aggregate Maximum Bit Rate | M | |
| Selected PLMN | O | |
| Mobility Restriction List | O | |
| Index to RAT/Frequency Selection Priority | O | |
| PDU Session Resources To Be Added List | | 1 |
| >PDU Session Resources To Be Added Item | | 1 .. <maxnoofPD USessions> |
| >>PDU Session ID | M | |
| >>S-NSSAI | M | |
| >>S-NG-RAN node PDU Session Aggregate Maximum Bit Rate | O | |
| >>PDU Session Resource Setup Info - SN terminated | O | |
| >>PDU Session Resource Setup Info - MN terminated | O | |
| M-NG-RAN node to S-NG-RAN node Container | M | |
| S-NG-RAN node UE XnAP ID | O | |
| Expected UE Behaviour | O | |
| Requested Split SRBs | O | |
| PCell ID | O | |
| Desired Activity Notification Level | O | |
| Available DRB IDs | C-ifSNterminated | |
| S-NG-RAN node Maximum Integrity Protected Data Rate Uplink | O | |
| S-NG-RAN node Maximum Integrity Protected Data Rate Downlink | O | |
| Location Information at S-NODE reporting | O | |
| MR-DC Resource Coordination Information | O | |
| Masked IMEISV | O | |
| NE-DC TDM Pattern | O | |
| SN Addition Trigger Indication | O | |
| Trace Activation | O | |
| Requested Fast MCG recovery via SRB3 | O | |
| UE Radio Capability ID | O | |
| S-NG-RAN node QMC Configuration Information | O | |

In an example, as shown in Table 4 below, the secondary node modification request may include the following information: a message type, an identifier of the terminal device on the Xn interface within the scope (M-NG-RAN node UE XnAP ID), an identifier of the terminal device on the Xn interface within the secondary node scope (S-NG-RAN node UE XnAP ID), Cause, a packet data convergence protocol change indication (PDCP Change Indication), a selected public land mobile network (Selected PLMN), a Mobility Restriction List, a SCG Configuration Query, a user equipment connection information (UE Context Information), a PDU Session Resources To Be Added List, M-NG-RAN node to S-NG-RAN node Container information, requested split SRBs, Requested Split SRBs release, a Desired Activity Notification Level, Available DRB IDs, S-NG-RAN node Maximum Integrity Protected Data Rate Uplink, S-NG-RAN node Maximum Integrity Protected Data Rate Downlink, Location Information at S-NODE reporting, MR-DC resource coordination information, PCell ID, Requested Fast MCG recovery via SRB3, Requested Fast MCG recovery via SRB3 Release, SN triggered, and S-NG-RAN node QMC Configuration Information.

It is noted that, in the present disclosure, the secondary node QoE configuration information is added to the secondary node modification request which is used to carry the S-NG-RAN node UE Application Layer Measurement Configuration Information, and the S-NG-RAN node UE Application Layer Measurement Configuration Information is used to carry the first indication message.

As can be seen from Table 4 below, Table 4 also shows the presence and range of each piece of information included in the secondary node addition request. For information other than the secondary node QoE configuration information in Table 4 below, reference may be made to the prior art, which will not be repeated herein.

**Table 4**

| IE/Group Name | Presence | Range |
|---|---|---|
| Message Type | M | |
| M-NG-RAN node UE XnAP ID | M | |
| S-NG-RAN node UE XnAP ID | M | |
| Cause | M | |
| PDCP Change Indication | O | |
| Selected PLMN | O | |
| Mobility Restriction List | O | |
| SCG Configuration Query | O | |
| UE Context Information | | 0..1 |
| >UE Security Capabilities | O | |
| >S-NG-RAN node Security Key | O | |
| >S-NG-RAN node UE Aggregate Maximum Bit Rate | O | |
| >Index to RAT/Frequency Selection Priority | O | |
| >Lower Layer presence status change | O | |
| >PDU Session Resources To Be Added List | | 0..1 |
| >>PDU Session Resources To Be Added Item | | 1 .. <maxnoofPD USessions> |
| >>>PDU Session ID | M | |
| >>>S-NSSAI | M | |
| >>>S-NG-RAN node PDU Session Aggregate Maximum Bit Rate | O | |
| >>>PDU Session Resource Setup Info - SN terminated | O | |
| >>>PDU Session Resource Setup Info - MN terminated | O | |
| >PDU Session Resources To Be Modified List | | 0..1 |
| >>PDU Session Resources To Be Modified Item | | 1 .. <maxnoofPD USessions> |
| >>>PDU Session ID | M | |
| >>>S-NG-RAN node PDU Session Aggregate Maximum Bit Rate | O | |
| >>>PDU Session Resource Modification Info - SN terminated | O | |
| >>>PDU Session Resource Modification Info - MN terminated | O | |
| >>>S-NSSAI | O | |
| >PDU Session Resources To Be Released List | O | |
| M-NG-RAN node to S-NG-RAN node Container | O | |
| Requested Split SRBs | O | |
| Requested Split SRBs release | O | |
| Desired Activity Notification Level | O | |
| Additional DRB IDs | O | |
| S-NG-RAN node Maximum Integrity Protected Data Rate Uplink | O | |
| S-NG-RAN node Maximum Integrity Protected Data Rate Downlink | O | |
| Location Information at S-NODE reporting | O | |
| MR-DC Resource Coordination Information | O | |
| PCell ID | O | |
| NE-DC TDM Pattern | O | |
| Requested Fast MCG recovery via SRB3 | O | |
| Requested Fast MCG recovery via SRB3 Release | O | |
| SN triggered | O | |
| S-NG-RAN node QMC Configuration Information | O | |

In a possible implementation, as shown in Table 5 below, the secondary node QoE configuration information may include a terminal device application layer measurement information list (UE Application Layer Measurement Information List). The UE application layer measurement information list may include a terminal device application layer measurement information item (UE Application Layer Measurement Information Item). The UE application layer measurement information item may include secondary node-terminal device application layer measurement reconfiguration information (S-NG-RAN node UE Application Layer Measurement Configuration Information).

As can be seen from Table 5 below, Table 5 also shows the presence and range of each piece of information included in the secondary node QoE configuration information. For information other than the S-NG-RAN node UE Application Layer Measurement Configuration Information in Table 5 below, reference may be made to the prior art, which will not be repeated herein.

**Table 5**

| IE/Group Name | Presence | Range |
|---|---|---|
| UE Application Layer Measurement Information List | | |
| >UE Application Layer Measurement Information Item | | 1..<maxnoofU EAppLayerMe as> |
| >> S-NG-RAN node UE Application Layer Measurement Configuration Information | M | |

In a possible implementation, as shown in Table 6, the response to the secondary node addition request may include the following information: a message type, an identifier of a terminal device on the Xn interface within the master node scope (M-NG-RAN node UE XnAP ID), an identifier of a terminal device on the Xn interface within the secondary node scope (S-NG-RAN node UE XnAP ID), a PDU Session Resources To Be Added List, a PDU Session Resources Not Admitted List, the S-NG-RAN node to M-NG-RAN node Container information, Admitted Split SRBs, a radio resource control reconfiguration indication (RRC Config Indication), criticality diagnostics, Location Information at S-NODE, MR-DC Resource Coordination Information, and information on available MCG recovery through SRB3 (Requested Fast MCG recovery via SRB3).

It is noted that, the S-NG-RAN node to M-NG-RAN node Container information in the response to the secondary node addition request may carry the configuration information for the QoE measurement transmitted from the first access network device to the second access network device.

As can be seen from Table 6 below, Table 6 also shows the presence and range of each piece of information included in the response to the secondary node addition request. For information other than the S-NG-RAN node to M-NG-RAN node Container information in Table 6 below, reference may be made to the prior art, which will not be repeated herein.

**Table 6**

| IE/Group Name | Presence | Range |
|---|---|---|
| Message Type | M | |
| M-NG-RAN node UE XnAP ID | M | |
| S-NG-RAN node UE XnAP ID | M | |
| PDU Session Resources Admitted To Be Added List | | 1 |
| >PDU Session Resources Admitted To Be Added Item | | 1 .. <maxnoofPDU Sessions> |
| >>PDU Session ID | M | |
| >>PDU Session Resource Setup Response Info - SN terminated | O | |
| >>PDU Session Resource Setup Response Info - MN terminated | O | |
| PDU Session Resources Not Admitted List | O | |
| >PDU Session Resources Not Admitted List - SN terminated | O | |
| >PDU Session Resources Not Admitted List - MN terminated | O | |
| S-NG-RAN node to M-NG-RAN node Container | M | |
| Admitted Split SRBs | O | |
| RRC Config Indication | O | |
| Criticality Diagnostics | O | |
| Location Information at S-NODE | O | |
| MR-DC Resource Coordination Information | O | |
| Available fast MCG recovery via SRB3 | O | |
| IE/Group Name | Presence | Range |
| Message Type | M | |
| M-NG-RAN node UE XnAP ID | M | |
| S-NG-RAN node UE XnAP ID | M | |
| PDU Session Resources Admitted To Be Added List | | 1 |
| >PDU Session Resources Admitted To Be Added Item | | 1 .. <maxnoofPDU Sessions> |
| >>PDU Session ID | M | |
| >>PDU Session Resource Setup Response Info - SN terminated | O | |
| >>PDU Session Resource Setup Response Info - MN terminated | O | |
| PDU Session Resources Not Admitted List | O | |
| >PDU Session Resources Not Admitted List - SN terminated | O | |
| >PDU Session Resources Not Admitted List - MN terminated | O | |
| S-NG-RAN node to M-NG-RAN node Container | M | |
| Admitted Split SRBs | O | |
| RRC Config Indication | O | |
| Criticality Diagnostics | O | |
| Location Information at S-NODE | O | |
| MR-DC Resource Coordination Information | O | |
| Available fast MCG recovery via SRB3 | O | |

In a possible implementation, as shown in Table 7, the response to the secondary node modification request may include the following information: a message type, the M-NG-RAN node UE XnAP ID, the S-NG-RAN node UE XnAP ID, the PDU Session Resources To Be Added List, the PDU Session resources admitted list, the S-NG-RAN node to M-NG-RAN node Container information, the Admitted Split SRBs, the Admitted Split SRBs release, the RRC Config Indication, the criticality diagnostics, the Location Information at S-NODE, the MR-DC resource coordination information, PDU Session Resources with Data Forwarding List, the Available Fast MCG recovery via SRB3 and Available MCG release via SRB3 (Release Fast MCG recovery via SRB3).

It is noted that, the S-NG-RAN node to M-NG-RAN node Container information in the response to the secondary node modification request may carry the configuration information for the QoE measurement transmitted from the first access network device to the second access network device.

As can be seen from Table 7 below, Table 7 also shows the presence and range of each piece of information included in the response to the secondary node modification request. For information other than the S-NG-RAN node to M-NG-RAN node Container information in Table 7 below, reference may be made to the prior art, which will not be repeated herein.

**Table 7**

| IE/Group Name | Presence | Range |
|---|---|---|
| Message Type | M | |
| M-NG-RAN node UE XnAP ID | M | |
| S-NG-RAN node UE XnAP ID | M | |
| PDU Session Resources Admitted List | | 0..1 |
| >PDU Session Resources Admitted To Be Added List | | 0..1 |
| >>PDU Session Resources Admitted To Be Added Item | | 1 .. <maxnoofPD USessions> |
| >>>PDU Session ID | M | |
| >>>PDU Session Resource Setup Response Info - SN terminated | O | |
| >>>PDU Session Resource Setup Response Info - MN terminated | O | |
| >PDU Session Resources Admitted To Be Modified List | | 0..1 |
| >>PDU Session Resources Admitted To Be Modified Item | | 1 .. <maxnoofPD USessions> |
| >>>PDU Session ID | M | |
| >>>PDU Session Resource Modification Response Info - SN terminated | O | |
| >>>PDU Session Resource Modification Response Info - MN terminated | O | |
| >PDU Session Resources Admitted To Be Released List | | 0..1 |
| >>PDU Session Resources admitted to be released List - SN terminated | O | |
| >>PDU Session Resources admitted to be released List - MN terminated | O | |
| PDU Session Resources Not Admitted to be Added List | O | |
| S-NG-RAN node to M-NG-RAN node Container | O | |
| Admitted Split SRBs | O | |
| Admitted Split SRBs release | O | |
| Criticality Diagnostics | O | |
| Location Information at S-NODE | O | |
| MR-DC Resource Coordination Information | O | |
| PDU Session Resources with Data Forwarding List | | 0..1 |
| >PDU Session Resources with Data Forwarding List - SN terminated | M | |
| RRC Config Indication | O | |
| Available fast MCG recovery via SRB3 | O | |
| Release fast MCG recovery via SRB3 | O | |

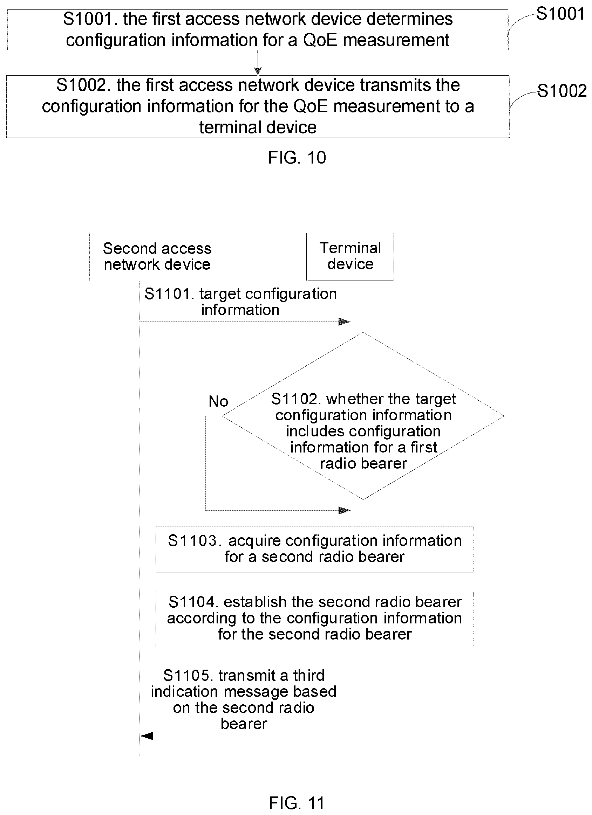

In a design, the embodiments of the present disclosure provide a QoE measurement method applied to a first access network device. As shown in FIG. 10, the method includes S1001-S1002.

In S1001, the first access network device determines configuration information for a QoE measurement.

Herein, the configuration information for the QoE measurement is used to instruct the terminal device to perform the QoE measurement. The configuration information for the QoE measurement includes an unencapsulated target QoE measurement parameter for optimizing the first access network device.

In a possible implementation, S1001 may be specifically implemented as follows: the first access network device receives a first indication message from a second access network device, determines, from a QoE measurement parameter set, a QoE measurement parameter for optimizing the first access network device as the target QoE measurement parameter, and determines the configuration information for the QoE measurement according to the target QoE measurement parameter. The first indication message includes: an identifier of the QoE measurement and the QoE measurement parameter set. The QoE measurement parameter set includes at least one unencapsulated QoE measurement parameter. The second access network device is a master node (MN).

In S1002, the first access network device transmits the configuration information for the QoE measurement to the terminal device.

In an optional implementation, S1002 may be specifically implemented as follows: the first access network device transmits the configuration information for the QoE measurement to the terminal device based on a first radio bearer. The first radio bearer is used to transmit information between the second access network device and the terminal device.

In another optional implementation, S1002 may be specifically implemented as follows: the first access network device transmits a second indication message to the second access network device. The second indication message is used to instruct the second access network device to transmit, based on a second radio bearer, the configuration information for the QoE measurement to the terminal device. The second radio bearer is used to transmit information between the second access network device and the terminal device.

In a feasible implementation, the first indication message further includes at least one of: an Internet Protocol address of a QoE measurement collection entity, a service type of the QoE measurement, and a type of the QoE measurement.

In an optional implementation, the configuration information for the QoE measurement further includes configuration information for a third radio bearer. The third radio bearer is used to transmit the configuration information for the QoE measurement between the first access network device and the terminal device.

In a possible implementation, the first indication message is carried in secondary node-terminal device application layer measurement reconfiguration information (S-NG-RAN node UE Application Layer Measurement Configuration Information). The S-NG-RAN node UE Application Layer Measurement Configuration Information is carried in secondary node quality management control reconfiguration information (S-NG-RAN node QMC Configuration Information). The S-NG-RAN node QMC Configuration Information is carried in secondary node addition request (S-NODE ADDITION REQUEST) or secondary node modification request (S-NODE MODIFICATION REQUEST). The configuration information for the QoE measurement is carried in secondary node to master node container (S-NG-RAN node to M-NG-RAN node Container) information. The S-NG-RAN node to M-NG-RAN node Container information is carried in the response to the secondary node addition request (S-NODE ADDITION REQUEST ACKNOWLEDGE) or the response to the secondary node modification request (S-NODE MODIFICATION REQUEST ACKNOWLEDGE).

In an optional embodiment, with the continuous development of communication systems, a terminal device may simultaneously use services provided by a plurality of access network devices (e.g., the first access network device and the second access network device). In order to facilitate the second access network device to optimize its own network performance, the terminal device would perform a QoE measurement based on the configuration information for the QoE measurement transmitted from the second access network device to the terminal device, generate a QoE measurement report, and transmit the QoE measurement report to the second access network device. In this way, the second access network device may perform the network optimization according to the QoE measurement report. However, the first access network device also needs to perform the network optimization based on the QoE measurement report. Therefore, it is a problem for those skilled in the art to enable the first access network device to acquire the QoE measurement report. In view of this, in some embodiments, as shown in FIG. 11, the embodiments of the present disclosure further provide a QoE measurement method, and the method includes steps S1101 to S1105.

In S1101, the second access network device transmits target configuration information to the terminal device. Correspondingly, the terminal device receives the target configuration information from the second access network device.

Herein, the target configuration information includes the configuration information generated by the first access network device.

Optionally, before the second access network device transmits the target configuration information to the terminal device, the first access network device transmits the target configuration information to the second access network device. Correspondingly, the second access network device receives the target configuration information from the first access network device.

In a possible implementation, the target configuration information may be carried in the response to the secondary node addition request (i.e., the SN Addition Request Acknowledge in S302) and the radio resource control reconfiguration message (i.e., the RRC reconfiguration message in S304).

In another possible implementation, the target configuration information may be carried in the response to the secondary node modification request (i.e., the SN Modification Request Acknowledge in S402) and the radio resource control reconfiguration message (i.e., the RRC reconfiguration message mentioned in S404).

In S1102, the terminal device determines whether the target configuration information includes the configuration information for the first radio bearer.

Herein, the first radio bearer is used to transmit information between the terminal device and the first access network device.

In an optional implementation, the first radio bearer may include at least one of SRB3 and a radio bearer (denoted as SRB5) used to transmit a first QoE measurement report. The SRB5 is an exemplary name for the radio bearer used to transmit the first QoE measurement report, and the radio bearer used to transmit the first QoE measurement report may also be in other names (for example, SRB6), and the present disclosure is not limited thereto.

If the first radio bearer includes SRB3, the terminal device may determine whether the target configuration information includes configuration information for the SRB3.

If the first radio bearer includes SRB5, the terminal device may determine whether the target configuration information includes configuration information for the SRB5.

If the first radio bearer includes both the SRB3 and SRB5, the terminal device may determine whether the target configuration information includes configuration information for the SRB3 or configuration information for the SRB5.

If the target configuration information does not include the configuration information for the first radio bearer, the terminal device performs S1103-S1105.

In S1103, the terminal device acquires configuration information for a second radio bearer.

Herein, the second radio bearer is used to transmit information between the terminal device and the second access network device.

In a possible implementation, S1103 is specifically implemented as follows: the second access network device transmits the configuration information for the second radio bearer to the terminal device. Correspondingly, the terminal device receives the configuration information for the second radio bearer from the second access network device.

In another possible implementation, S1103 is specifically implemented as follows: the terminal device may acquire the configuration information for the second radio bearer from the target configuration information in S1101.

In an optional implementation, the second radio bearer may include at least one of SRB1 and SRB4. The SRB1 and SRB4 may be understood by referring to the description in the related contents mentioned above, which will not be repeated herein.

In S1104, the terminal device establishes the second radio bearer according to the configuration information for the second radio bearer.

In combination with the above implementations, if the second radio bearer includes SRB1, the terminal device may establish the SRB1 according to the configuration information for SRB1.

If the second radio bearer includes SRB4, the terminal device may establish the SRB4 according to the configuration information for SRB4.

If the second radio bearer includes SRB1 and SRB4, the terminal device may establish a radio bearer according to any one of the configuration information for SRB1 and the configuration information for SRB4. For example, the terminal device establishes SRB1 according to the configuration information for SRB1; for another example, the terminal device establishes SRB4 according to the configuration information for SRB4; and the terminal device may also establish SRB1 and SRB4 according to the configuration information for SRB1 and the configuration information for SRB4.

In S1105, the terminal device transmits a third indication message to the second access network device based on the second radio bearer. Correspondingly, the second access network device receives the third indication message from the terminal device based on the second radio bearer.

Herein, the third indication message is used to instruct the second access network device to transmit a first QoE measurement report to the first access network device. The first QoE measurement report is obtained by performing measurement based on the configuration information for the QoE measurement configured by the first access network device.

In an optional implementation, the configuration information for the QoE measurement configured by the first access network device and the configuration information for the QoE measurement configured by the second access network device may be the same as or different from each other.

Exemplarily, the configuration information for the QoE measurement may include: the identifier of the QoE measurement, a QoE measurement parameter, and the service type of the QoE measurement. This is only an exemplary explanation of the configuration information for the QoE measurement, and the configuration information for the QoE measurement may also include other information, and the present disclosure is not limited thereto.

In a possible implementation, the first QoE measurement report may be a measurement report visible to an access network device (RAN visible measurements report).

Optionally, the configuration information for the QoE measurement configured by the first access network device may be transmitted via the second access network device to the terminal device, or may be transmitted from the first access network device to the terminal device.

In an optional implementation, the third indication message may include the first QoE measurement report. Since the first QoE measurement report is a QoE measurement report for the first access network device, after the second access network device receives the third indication message from the terminal device based on the second radio bearer, the second access network device may transmit the first QoE measurement report to the first access network device based on its stored identifier of the first access network device. Correspondingly, the first access network device receives the first QoE measurement report from the second access network device.

In a possible implementation, the first QoE measurement report may include a measurement result for the QoE measurement parameter included in the configuration information for the QoE measurement configured by the first access network device.

Optionally, after receiving the first QoE measurement report, the first access network device may directly perform network optimization on itself according to the measurement result of at least one QoE measurement parameter included in the first QoE measurement report, without decapsulation.

As a possible implementation, the first indication message may be carried in measurement report application layer (measurement report app layer) information. The first indication message may include the first QoE measurement report.

In an optional example, the measurement report application layer message including the first indication message may be carried in an uplink information transfer multi-rate dual connection (i.e., UL Information Transfer MRDC) message transmitted by the terminal device to the first access network device. The measurement report application layer (measurement report app layer) message is added to uplink dedicated control channel information (UL-DCCH-Message) in the uplink information transfer multi-rate dual connection (i.e., UL Information Transfer MRDC) message. Herein, the measurement report application layer message is the first QoE measurement report in the first indication message.

Exemplarily, the uplink information transfer multi-rate dual connection message may be:

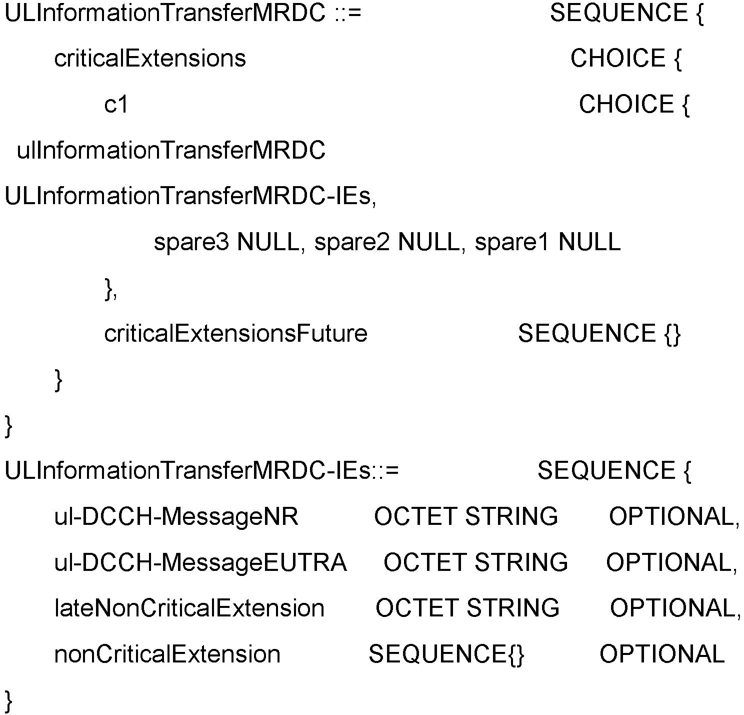

Optionally, the method shown in FIG. 11 may also be applied to a scenario where there is the first radio bearer between the terminal device and the first access network device, and the present disclosure is not limited thereto.

In a possible implementation, the identifier of the first QoE measurement may be a measurement report application layer identifier (measurement report app layer ID).

This technical solution brings about at least beneficial effects as follows. In the QoE measurement method provided by the present disclosure, the terminal device first receives the target configuration information (including the configuration information generated by the first access network device) from the second access network device. In a case where the target configuration information does not include the configuration information for the first radio bearer, the terminal device may further acquire the configuration information for the second radio bearer, establish the second radio bearer, and transmit the third indication message to the second access network device based on the second radio bearer. After the second access network device receives the third indication message, the second access network device transmits the first QoE measurement report to the first access network device. As such, the first access network device may receive the first QoE measurement report of the terminal device through the forwarding of the second access network device, which enables the first access network device to receive the first QoE measurement report normally, and subsequently perform the network optimization on itself according to the first QoE measurement report.

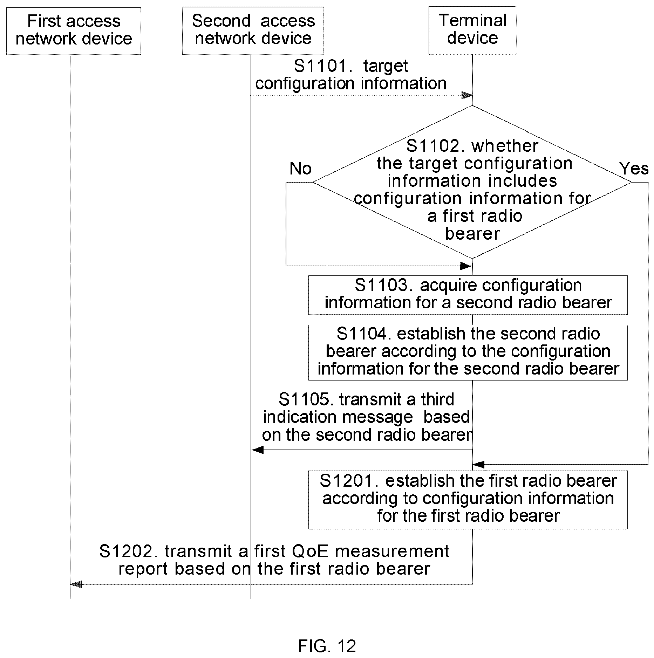

In an optional embodiment, the method shown in FIG. 11 is directed at a solution how the terminal device transmits the first QoE measurement report to the first access network device when the target configuration information does not include the configuration information for the first radio bearer. However, in a case where the target configuration information includes the configuration information for the first radio bearer, the terminal device may also transmit directly the first QoE measurement report to the first access network device. On the basis of the method embodiment shown in FIG. 11, a possible implementation is provided by the present embodiment. As shown in FIG. 12, in a case where the target configuration information includes the configuration information for the first radio bearer, the operation of the first access network device acquiring the first QoE measurement report may be specifically implemented through S1201-S1202.

In S1201, the terminal device establishes the first radio bearer according to the configuration information for the first radio bearer.

In combination with the above-mentioned implementations, if the first radio bearer includes SRB3, the terminal device may establish the SRB3 according to the configuration information for SRB3.

If the first radio bearer includes SRB5, the terminal device may establish the SRB5 according to the configuration information for SRB5.

If the first radio bearer includes SRB3 and SRB5, the terminal device may establish a radio bearer according to any one of the configuration information for SRB3 and the configuration information for SRB5. For example, the terminal device establishes SRB3 according to the configuration information for SRB3; for another example, the terminal device establishes SRB5 according to the configuration information for SRB5; the terminal device may also establish SRB3 and SRB5 according to the configuration information for SRB3 and the configuration information for SRB5.

In S1202, the terminal device transmits the first QoE measurement report to the first access network device based on the first radio bearer. Correspondingly, the first access network device receives the first QoE measurement report from the terminal device based on the first radio bearer.

In an optional embodiment, the first radio bearer used to transmit the first QoE measurement report is SRB5 of the first radio bearer.

In a possible implementation, the first QoE measurement report includes: an identifier of the first QoE measurement and a measurement result of at least one QoE measurement parameter. The measurement result is unencapsulated.

It is noted that, the measurement result is obtained by the terminal device through performing measurement based on the unencapsulated QoE measurement parameter.

In an optional implementation, the unencapsulated QoE measurement parameter may be ran-visible Measurements information.

As a possible implementation, the first QoE measurement report may be carried in measurement report app layer-r17 information. Optionally, the method shown in FIG. 12 may also serve as a method in parallel with the method shown in FIG. 11. The method shown in FIG. 12 may also solve the problem of how to enable the first access network device (e.g., SN) to acquire a QoE measurement report.

The above technical solution brings about at least beneficial effects as follows. In the QoE measurement method provided by the present disclosure, in a case where the target configuration information includes the configuration information for the first radio bearer (i.e., a radio bearer used to transmit information between the terminal device and the first access network device), the terminal device establishes the first radio bearer based on the configuration information for the first radio bearer, and transmits the first QoE measurement report to the first access network device based on the first radio bearer. As such, the first access network device may receive normally the first QoE measurement report, which facilitates the first access network device to subsequently perform the network optimization on itself according to the first QoE measurement report.

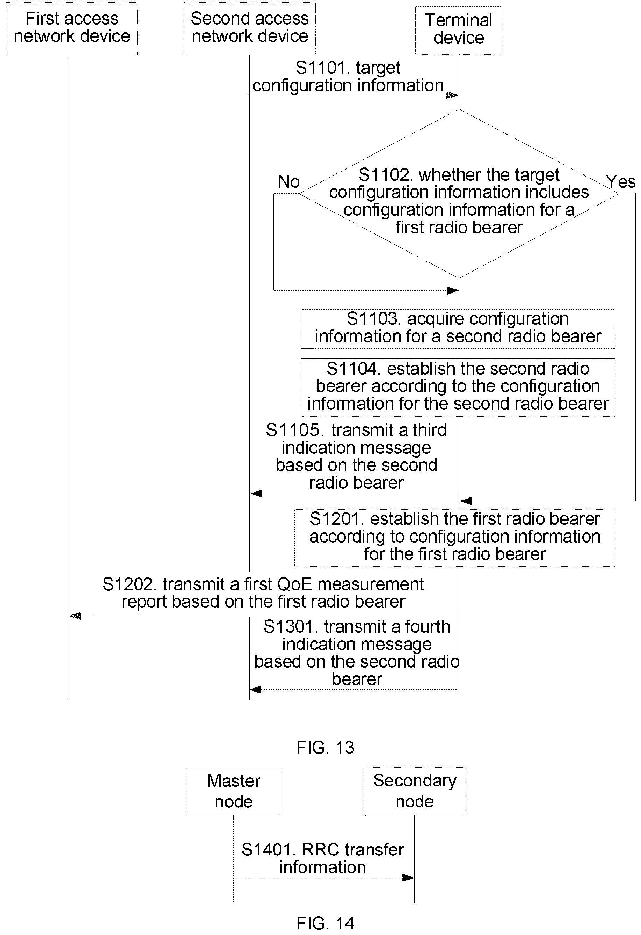

In an optional embodiment, as shown in S1105, the terminal device may transmit the third indication message alone to the second access network device. However, the terminal device may also perform the QoE measurement based on the configuration information for the QoE measurement configured by the second access network device, and generate a second QoE measurement report based on this configuration information. In this way, the terminal device may transmit the third indication message and the second QoE measurement report together to the second access network device, which may reduce communication overhead compared with a case of transmitting them separately. On the basis of the method embodiment shown in FIG. 11, a possible implementation is provided by the present embodiment. As shown in FIG. 13, the operation of the terminal device transmitting the third indication message and the second QoE measurement report together to the second access network device may be specifically implemented through S1301.

In S1301, the terminal device transmits a fourth indication message to the second access network device based on the second radio bearer.

Herein, the fourth indication message includes the third indication message and a second QoE measurement report. The second QoE measurement report is obtained by performing measurement based on the configuration information for the QoE measurement configured by the second access network device that is transmitted by the second access network device.

In an optional embodiment, the second radio bearer used to transmit the second QoE measurement report is a signaling radio bearer SRB4 of the second radio bearer.

Optionally, the second QoE measurement report may be different from the first QoE measurement report, or may be the same as the first QoE measurement report. In a case where the second QoE measurement report may be different from the first QoE measurement report, the fourth indication message may include the third indication message and the second QoE measurement report. In a case where the second QoE measurement report may be the same as the first QoE measurement report, the fourth indication message may include the third indication message.

It can be understood that, the second QoE measurement report is obtained by the terminal device through performing measurement based on the configuration information for the QoE measurement configured by the second access network device, and the second radio bearer is used to transmit information between the terminal device and the second access network device, so the second QoE measurement report may also be transmitted via the second radio bearer. In a case where both the first QoE measurement report and the second QoE measurement report are transmitted using the second radio bearer, the terminal device may merge the second QoE measurement report and the third indication message generated based on the first QoE measurement report, to generate the fourth indication message. In this way, the terminal device may transmit the third indication message and the second QoE measurement report together, which may reduce communication overhead and reduce the burden on the communication system to a certain extent compared with the case of transmitting the third indication message and the second QoE measurement report separately.

As a possible implementation, the second indication message may be carried in the measurement report application layer (measurement report app layer) information.

Exemplarily, the measurement report application layer information may be:

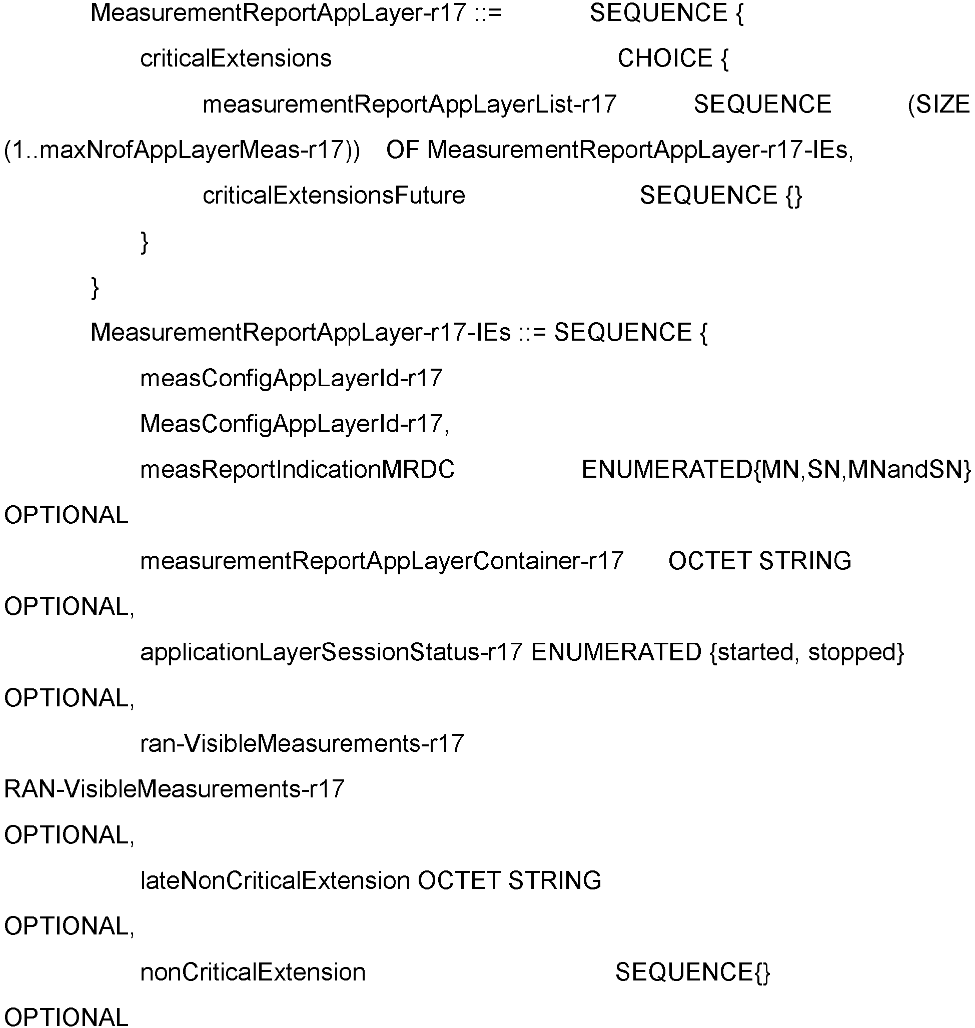

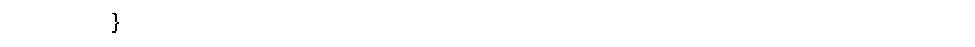

In a possible implementation, the first QoE measurement report and the second QoE measurement report of the second indication message may be distinguished by an indicator bit. For example, an indicator bit for the first QoE measurement report in the second indication message is 0, an indicator bit for the second QoE measurement report in the second indication message is 1, and the indicator bit for both the first QoE measurement report and the second QoE measurement report in the second indication message is 2 (in this case, the first QoE measurement report is the same as the second QoE measurement report). In conjunction with the above-mentioned examples about the measurement report application layer (measurement report app layer) information, the indicator bit may be carried in a measurement report indication multi-rate dual connectivity (measReportIndicationMRDC) message of the measurement report application layer (measurement report app layer) information.

Optionally, after the second access network device receives the fourth indication message, the second access network device may transmit the first QoE measurement report to the first access network device.

In an optional implementation, as shown in FIG. 14, the first QoE measurement report may be carried in a radio resource bearer transfer (RRC transfer) information transmitted from the master node (i.e., the second access network device) to the secondary node (i.e., the first access network device) (i.e., S1401 in FIG. 14). In this case, the second access network device may transmit the first QoE measurement report to the first access network device via the RRC transfer information.

In an optional example, as shown in Table 8 below, the RRC transfer information may include: a message type, an identifier of the terminal device on the Xn interface within the master node scope (M-NG-RAN node UE XnAP ID), an identifier of the terminal device on the Xn interface within the secondary node scope (S-NG-RAN node UE XnAP ID), a split signaling radio bearer (split SRB), and a user equipment report. Herein, the split signaling radio bearer (split SRB) includes: a radio resource bearer container (RRC container), a signaling radio bearer type (SRB type), and a delivery status. The user equipment report (UE Report) includes a radio resource bearer container (RRC container).

In a possible implementation, the first QoE measurement report may be carried in the radio resource bearer container (RRC container) of the user equipment report (UE Report) of the RRC transfer information.

In another possible implementation, the first QoE measurement report may be carried in the UE Report of the RRC transfer information. In this case, the first QoE measurement report does not need to be carried in the RRC container.

In another possible implementation, the first QoE measurement report may be carried in other existing defined information between the second access network device and the first access network device.

**Table 8**

| IE/Group Name | Presence | Range | IE type and reference | Semantics description |
|---|---|---|---|---|
| Message Type | M | | 9.2.3.1 | |
| M-NG-RAN node UE XnAP ID | M | | NG-RAN node UE XnAP ID 9.2.3.16 | Allocated at the M-NG-RAN node |
| S-NG-RAN node UE XnAP ID | M | | NG-RAN node UE XnAP ID 9.2.3.16 | Allocated at the S-NG-RAN node |
| Split SRB | | 0..1 | | |
| >RRC Container | O | | OCTET STRING | Contains a PDCP-C PDU encapsulating an RRC message as defined in subclause 6.2.1 of TS 38.331 [10] or TS 36.331 [14] and ciphered with the key of the M-NG-RAN node |
| >SRB Type | M | | ENUMERATE D (srb1, srb2, ...) | The SRB type to be used |
| >Delivery Status | O | | 9.2.3.45 | DL RRC delivery status of split SRB |
| UE Report | | 0..1 | | |
| >RRC Container | M | | OCTET STRING | For NGEN-DC and NR-DC, includes the UL-DCCH-Message as defined in subclause 6.2.1 of TS 38.331 [10] containing the MeasurementReport message or the RRCReconfigurationCo mplete message or the Failure Information message or the UEAssistanceInformatio n message or measurementReportApp Layer message. For NE-DC, includes the UL-DCCH-Message as defined in subclause 6.2.1 of TS 36.331 [14] containing the MeasurementReport message. |

In another optional implementation, the first QoE measurement report may be carried in target information. The target information is used for transmission of the first QoE measurement report and/or the second QoE measurement report. In this case, the second access network device may transmit the first QoE measurement report to the first access network device via the target information. Exemplarily, the target information may also be referred to as user equipment application layer measurement report transfer (UE application layer measurement report transfer).

In an optional example, as shown in Table 9 below, the target information may include: a message type, an identifier of the terminal device on the Xn interface within the master node scope (M-NG-RAN node UE XnAP ID), an identifier of the terminal device on the Xn interface within the secondary node scope (S-NG-RAN node UE XnAP ID), a user equipment application layer measurement report list (UE application layer measurement report list), QoE identifier (QoE Reference), and a measurement result of at least one unencapsulated QoE measurement parameter (RAN visible measurements report).

**Table 9**

| IE/Group Name | Presence | Range | IE type and reference | Semantics description |
|---|---|---|---|---|
| Message Type | M | | 9.2.3.1 | |
| M-NG-RAN node UE XnAP ID | M | | NG-RAN node UE XnAP ID 9.2.3.16 | Allocated at the M-NG-RAN node |
| S-NG-RAN node UE XnAP ID | M | | NG-RAN node UE XnAP ID 9.2.3.16 | Allocated at the S-NG-RAN node |
| UE Application Layer Measurement Report List | | 1..<ma xnoofU EAppL ayerM eas> | | |
| >QoE Reference | M | | OCTET STRING (SIZE(6)) | QoE Reference, as defined in clause 5.2 of TS 28.405. It consists of MCC + MNC + QMC ID, where the MCC and MNC are coming with the QMC activation request from the management system to identify one PLMN containing the management system, and QMC ID is a 3 bytes Octet String. |
| >RAN Visible Measurements Report | O | | | RAN visible measurement report transferred between the MN and the SN |

Optionally, the SRB5 may be obtained by modifying SRB4. Specifically, the second access network device and the first access network device may change a transmission end of SRB4 via a secondary node modification process, so that the modified SRB4 may be used to transmit data between the terminal device and the first access network device. The secondary node modification process may be understood by referring to the explanation in the corresponding content mentioned above, which will not be repeated herein.

Optionally, after the second access network device receives the response to the secondary node modification request from the first access network device, the second access network device may first decapsulate the S-NG-RAN node to M-NG-RAN node Container information in the response to the secondary node modification request, and then configure a new SRB4 (which is SRB5) according to the decapsulated S-NG-RAN node to M-NG-RAN node Container information.

The above technical solutions bring about at least beneficial effects as follows. In the QoE measurement method provided by the present disclosure, the terminal device may generate the fourth indication message based on the third indication message and the second QoE measurement report. As such, the third indication message and the second QoE measurement report can be transmitted together, so that the second access network device may receive the second QoE measurement report, and the first access network device may receive the first QoE measurement report. Compared with a case where the terminal device transmits the third indication message and the second QoE measurement report separately, the transmission of the merged third indication message and second QoE measurement report may reduce communication overhead and reduce the burden on the communication system to a certain extent.

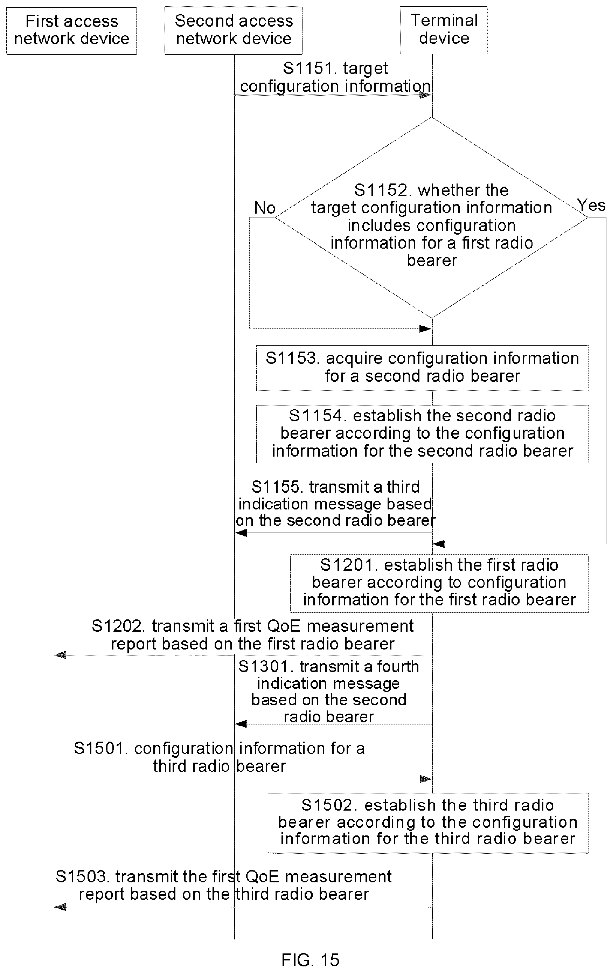

In an optional embodiment, the method shown in FIG. 11 involves transmitting the first QoE measurement report based on the first radio bearer. The first radio bearer may include: a radio bearer used to transmit information between the terminal device and the first access network device, and a radio bearer used to transmit the first QoE measurement report. The first radio bearer may also be used to transmit other data other than the first QoE measurement report. If a priority of the other data is higher than a priority of the first QoE measurement report, the normal transmission of the first QoE measurement report will be affected. Therefore, in a case where the first radio bearer includes a radio bearer used to transmit information between the terminal device and the first access network device, the terminal device may also establish a radio bearer (recorded as a third radio bearer) used to transmit the first QoE measurement report, this can ensure the normal transmission of the first QoE measurement report as much as possible. On the basis of the method embodiment shown in FIG. 15, a possible implementation is provided by the present embodiment. As shown in FIG. 15, the operation of the terminal device transmitting the first QoE measurement report based on the third radio bearer may be specifically implemented through S1501-S1503.

In S1501, the first access network device transmits configuration information for a third radio bearer to the terminal device. Correspondingly, the terminal device receives the configuration information for the third radio bearer from the first access network device.

Herein, the third radio bearer is used to transmit the first QoE measurement report.

As a feasible implementation, if there is the first radio bearer (e.g., SRB3) before S1501, the first access network device may transmit directly the configuration information for the third radio bearer to the terminal device based on the first radio bearer.

As a feasible implementation, if there is no first radio bearer (for example, SRB3) but there is a second radio bearer (for example, SRB1 or SRB4) before S1501, the first access network device may transmit the configuration information for the third radio bearer to the terminal device through the second access network device based on the second radio bearer.

In an optional implementation, the third radio bearer may be SRB5 (i.e., a radio bearer used to transmit the first QoE measurement report).

In an optional implementation, the configuration information for the third radio bearer may also be added to the response to the secondary node addition request (i.e., the SN Addition Request Acknowledge in S302) and the radio resource control reconfiguration message (i.e., the RRC reconfiguration message in S304).

In another possible implementation, the configuration information for the third radio bearer may also be carried in the response to the secondary node modification request (i.e., the SN Modification Request Acknowledge in S402) and the radio resource control reconfiguration message (i.e., the RRC reconfiguration message in S404).

In S1502, the terminal device establishes the third radio bearer according to the configuration information for the third radio bearer.

Optionally, after the terminal device establishes the third radio bearer based on the configuration information for the third radio bearer, the terminal device may transmit establishment response information to the first access network device via the second access network device. The establishment response information indicates that the terminal device has established the third radio bearer successfully.

In S1503, the terminal device transmits the first QoE measurement report to the first access network device based on the third radio bearer.

It is noted that, S1503 may be understood by referring to the description of S1202, which will not be repeated herein.

In this implementation, the method shown in FIG. 15 is applicable to the case where the first radio bearer only includes SRB3. If the first radio bearer includes SRB3 and SRB5, the terminal device would have already established the SRB3 and the SRB5 in S1201. Therefore, in this case, the terminal device does not need to establish the third radio bearer according to the acquired configuration information for the third radio bearer.

The above technical solution brings about at least beneficial effects as follows. In the QoE measurement method provided by the present disclosure, the terminal device may establish, based on the configuration information for the third radio bearer received from the first access network device, the third radio bearer for transmitting the first QoE measurement report, and transmit the first QoE measurement report to the first access network device based on the third radio bearer. As such, the first access network device may receive normally the first QoE measurement report, which enables the first access network device to subsequently perform the network optimization on itself according to the first QoE measurement report. Furthermore, compared with the case of transmitting the first QoE measurement report based on the first radio bearer (for example, a radio bearer used to transmit the first QoE measurement report and other signaling), the third radio bearer may be used to transmit the first QoE measurement report. This neither affects the transmission of other signaling, nor brings transmission resource occupation by other signaling which would otherwise cause the first QoE measurement report not to be transmitted normally, thereby ensuring stable transmission of the first QoE measurement report.

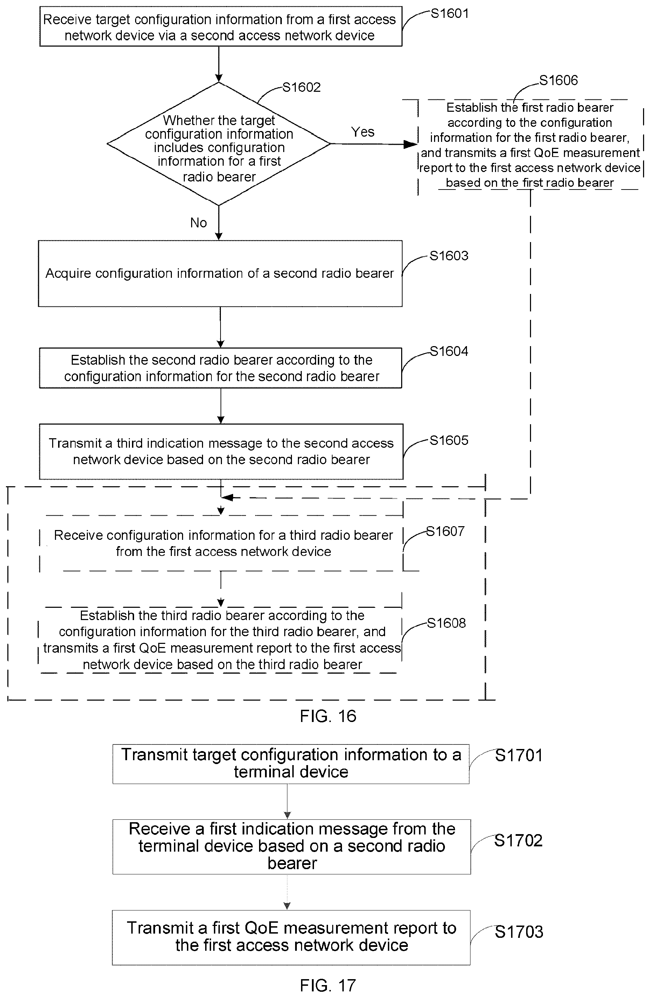

In a design, the embodiments of the present disclosure provide a QoE measurement method applied to a terminal device. As shown in FIG. 16, the method includes S1601-S1605.

In S1601, the terminal device receives target configuration information of a first access network device via a second access network device.

Herein, the target configuration information includes configuration information generated by the first access network device.

In S1602, the terminal device determines whether the target configuration information includes configuration information for a first radio bearer.

If the target configuration information does not include the configuration information for the first radio bearer, the terminal device performs S1603.

In S1603, the terminal device acquires configuration information for a second radio bearer.

Herein, the second radio bearer is used to transmit information between the terminal device and the second access network device.

In S1604, the terminal device establishes the second radio bearer according to the configuration information for the second radio bearer.

In S1605, the terminal device transmits a third indication message to the second access network device based on the second radio bearer.

Herein, the third indication message is used to instruct the second access network device to transmit a first QoE measurement report to the first access network device.

In an optional implementation, the first indication message includes the first QoE measurement report.

In a possible implementation, S1605 may be specifically implemented as follows. The terminal device transmits a fourth indication message to the second access network device based on the second radio bearer. The fourth indication message includes the third indication message and a second QoE measurement report. The second QoE measurement report is obtained by the terminal device through performing measurement based on the configuration information for the QoE measurement configured by the second access network device.

In a design, in a case where the target configuration information includes the configuration information for the first radio bearer, the method shown in FIG. 16 further includes S1606.

In S1606, the terminal device establishes the first radio bearer according to the configuration information for the first radio bearer, and transmits the first QoE measurement report to the first access network device based on the first radio bearer.

Herein, the first radio bearer is used to transmit information between the terminal device and the first access network device. The first QoE measurement report is obtained by performing measurement based on the configuration information for the QoE measurement configured by the first access network device.

In a design, the method shown in FIG. 16 further includes S1607-S1608.

In S1607, the terminal device receives the configuration information for the third radio bearer from the first access network device.

Herein, the third radio bearer is used to transmit the first QoE measurement report.

In S1608, the terminal device establishes the third radio bearer according to the configuration information for the third radio bearer, and transmits the first QoE measurement report to the first access network device based on the third radio bearer.

In a design, the first QoE measurement report includes: an identifier of the first QoE measurement and a measurement result of at least one QoE measurement parameter, the measurement result is unencapsulated.

In a design, the embodiments of the present disclosure provide a QoE measurement method applied to a second access network device. As shown in FIG. 17, the method includes S1701-S1703.

In S1701, the second access network device transmits target configuration information to a terminal device.

Herein, the target configuration information includes configuration information generated by a first access network device.

In a possible implementation, the target configuration information includes at least one of: cell configuration of a secondary cell group (SCG), bearer configuration of the SCG, configuration information for a QoE measurement configured by the first access network device, and a cell identifier of the first access network device.

In S1702, the second access network device receives a first indication message from the terminal device based on a second radio bearer.

Herein, the second radio bearer is used to transmit information between the terminal device and the second access network device. The first indication message includes a first QoE measurement report. The first QoE measurement report is obtained by performing measurement based on the configuration information for the QoE measurement configured by the first access network device.

In S1703, the second access network device transmits the first QoE measurement report to the first access network device.

In a design, the first QoE measurement report includes: an identifier of the first QoE measurement and a measurement result of at least one QoE measurement parameter, the measurement result is unencapsulated.

It can be understood that, the QoE measurement method may be implemented by the first access network device. In order to implement the above-mentioned functions, the first access network device contains corresponding hardware structures and/or software modules for performing various functions. Those skilled persons in the art should easily realize that the embodiments of the present disclosure may be implemented in the form of hardware or a combination of hardware and computer software in combination with modules and algorithm steps of various examples described in the embodiments of the present disclosure. Depending on the specific application and design constraint conditions of the technical solution, the certain function is executed by hardware or by computer software driving the hardware. Professional technicians may use different methods to implement the described functions for each specific application, but such implementation should not be considered as extending beyond the scope of the embodiments of the present disclosure.

The embodiments of the present disclosure may divide the functional modules of the first access network device according to the above method examples. For example, each functional module may be divided to correspond to one function, or two or more functions may be integrated into a processing module. The integrated module is implemented in the form of hardware or in the form of software functional module. It is noted that the division of the functional modules in the embodiments of the present disclosure is schematic, which only illustrate logical functional division, and there may be other manners to divide the functional modules in actual implementation.

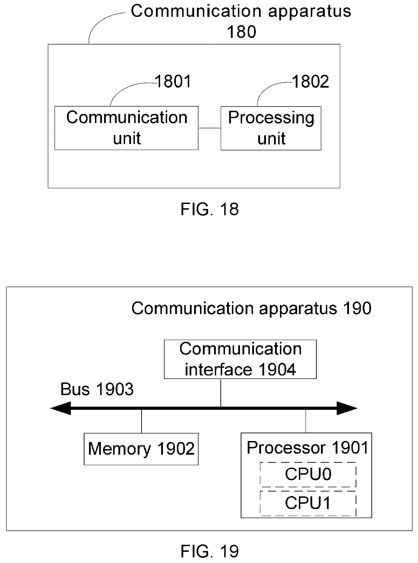

Exemplarily, FIG. 18 shows a possible structural schematic diagram of a communication apparatus (denoted as communication apparatus 180) involved in the above-mentioned embodiments. The communication apparatus 180 includes a communication unit 1801 and a processing unit 1802. Optionally, the communication apparatus 180 may also include a storage unit. The communication apparatus 180 may be used to illustrate the structure of the first access network device and the terminal device in the above-mentioned embodiments.

When FIG. 18 is used to illustrate the structure of the first access network device in the above-mentioned embodiments:

The processing unit 1802 is configured to determine configuration information for a QoE measurement. The configuration information for the QoE measurement is used to instruct a terminal device to perform the QoE measurement. The configuration information for the QoE measurement includes an unencapsulated target QoE measurement parameter used to optimize the first access network device.

The communication unit 1801 is configured to transmit the configuration information for the QoE measurement to the terminal device.

In a possible implementation, the communication unit 1801 is further configured to receive a first indication message from a second access network device. The first indication message includes: an identifier of the QoE measurement, and a QoE measurement parameter set. The QoE measurement parameter set includes at least one unencapsulated QoE measurement parameter. The second access network device is a master node (MN). The processing unit 1802 is further configured to determine, from the QoE measurement parameter set, a QoE measurement parameter used to optimize the first access network device as the target QoE measurement parameter. The processing unit 1802 is further configured to determine the configuration information for the QoE measurement according to the target QoE measurement parameter.

In a possible implementation, the communication unit 1801 is further configured to transmit the configuration information for the QoE measurement to the terminal device based on a first radio bearer. The first radio bearer is used to transmit information between the first access network device and the terminal device.

In a possible implementation, the communication unit 1801 is further configured to transmit a second indication message to the second access network device. The second indication message is used to instruct the second access network device to transmit, based on a second radio bearer, the configuration information for the QoE measurement to the terminal device. The second radio bearer is used to transmit information between the second access network device and the terminal device.

In a possible implementation, the first indication message further includes at least one of: an Internet Protocol address of a QoE measurement collection entity, a service type of the QoE measurement, and a type of the QoE measurement.

In a possible implementation, the configuration information for the QoE measurement further includes configuration information for a third radio bearer. The third radio bearer is used to transmit the configuration information for the QoE measurement between the first access network device and the terminal device.

In a possible implementation, the first indication message is carried in the secondary node-terminal device application layer measurement reconfiguration information (S-NG-RAN node UE Application Layer Measurement Configuration Information). The secondary node-terminal device application layer measurement reconfiguration information (S-NG-RAN node UE Application Layer Measurement Configuration Information) is carried in the secondary node quality management control reconfiguration information (S-NG-RAN node QMC Configuration Information). The secondary node quality management control reconfiguration information (S-NG-RAN node QMC Configuration Information) is carried in the secondary node addition request (S-NODE ADDITION REQUEST) or the secondary node modification request (S-NODE MODIFICATION REQUEST). The configuration information for the QoE measurement is carried in the secondary node to the master node container (S-NG-RAN node to M-NG-RAN node Container) information. The secondary node to the master node container (S-NG-RAN node to M-NG-RAN node Container) information is carried in the response to the secondary node addition request (S-NODE ADDITION REQUEST ACKNOWLEDGE) or the response to the secondary node modification request (S-NODE MODIFICATION REQUEST ACKNOWLEDGE).

In a possible implementation, the first radio bearer used to transmit the configuration information for the QoE measurement is a signaling radio bearer SRB 3 of the first radio bearer.

In a possible implementation, the second radio bearer used to transmit the configuration information for the QoE measurement is a signaling radio bearer SRB 1 of the second radio bearer.

When FIG. 18 is used to illustrate a structure of a terminal device in the above-mentioned embodiments:

The processing unit 1802 is configured to instruct the communication unit 1801 to receive the configuration information for a QoE measurement from the first access network device. The configuration information for the QoE measurement is used to instruct the terminal device to perform the QoE measurement. The configuration information for the QoE measurement includes an unencapsulated target QoE measurement parameter used to optimize the first access network device. The first access network device is a secondary node (SN).

In a possible implementation, the first indication message further includes at least one of: an Internet Protocol address of a QoE measurement collection entity, a service type of the QoE measurement, and a type of the QoE measurement.

In a possible implementation, the configuration information for the QoE measurement further includes configuration information for a third radio bearer. The third radio bearer is used to transmit the configuration information for the QoE measurement between the first access network device and the terminal device.

In a possible implementation, the first indication message is carried in the secondary node-terminal device application layer measurement reconfiguration information (S-NG-RAN node UE Application Layer Measurement Configuration Information). The S-NG-RAN node UE Application Layer Configuration Information is carried in the secondary node quality management control reconfiguration information (S-NG-RAN node QMC Configuration Information). The S-NG-RAN node QMC Configuration Information is carried in the secondary node addition request (S-NODE ADDITION REQUEST) or the secondary node modification request (S-NODE MODIFICATION REQUEST). The configuration information for the QoE measurement is carried in the secondary node to the master node container (S-NG-RAN node to M-NG-RAN node Container) information. The S-NG-RAN node to M-NG-RAN node Container information is carried in the response to the secondary node addition request (S-NODE ADDITION REQUEST ACKNOWLEDGE) or the response to the secondary node modification request (S-NODE MODIFICATION REQUEST ACKNOWLEDGE).

In a possible implementation, the processing unit 1802 is further configured to instruct the communication unit 1801 to receive target configuration information from the second access network device. The target configuration information includes configuration information generated by the first access network device. The second access network device is a master node (MN). In a case where the target configuration information does not include configuration information for a first radio bearer, the processing unit 1802 is further configured to instruct the communication unit 1801 to acquire configuration information for a second radio bearer. The first radio bearer is used to transmit information between the terminal device and the first access network device. The second radio bearer is used to transmit information between the terminal device and the second access network device. The processing unit 1802 is further configured to establish the second radio bearer according to the configuration information for the second radio bearer, and instruct the communication unit 1801 to transmit a third indication message to the second access network device based on the second radio bearer. The third indication message is used to instruct the second access network device to transmit a first QoE measurement report to the first access network device. The first QoE measurement report is obtained by performing measurement based on the configuration information for the QoE measurement configured by the first access network device.

In a possible implementation, in a case where the configuration information includes the configuration information for a first radio bearer, the method further includes: the processing unit 1802 is further configured to establish the first radio bearer according to the configuration information for the first radio bearer, and transmit the first QoE measurement report to the first access network device based on the first radio bearer.

In a possible implementation, regarding transmitting the third indication message to the first access network device based on the second radio bearer, the processing unit 1802 is further configured to transmit a fourth indication message to the second access network device based on the second radio bearer. The fourth indication message includes the third indication message and a second QoE measurement report. The second QoE measurement report is obtained by performing measurement based on the configuration information for the QoE measurement configured by the second access network device.

In a possible implementation, the processing unit 1802 is further configured to instruct the communication unit 1801 to receive configuration information for a third radio bearer from the first access network device. The third radio bearer is used to transmit the first QoE measurement report. The processing unit 1802 is further configured to establish the third radio bearer according to the configuration information for the third radio bearer, and instruct the communication unit 1801 to transmit the first QoE measurement report to the first access network device based on the third radio bearer.

In a possible implementation, the first QoE measurement report includes: an identifier of the first QoE measurement and a measurement result of a target QoE measurement parameter, where the measurement result is unencapsulated.

In a possible implementation, the first QoE measurement report is carried in radio resource bearer transfer (RRC Transfer) information, or may also be carried in target information. The target information is used for transmission of the first QoE measurement report and/or the second QoE measurement report.

In a possible implementation, the first radio bearer used to transmit the first QoE measurement report is a signaling radio bearer SRB5 of the first radio bearer.

In a possible implementation, the second radio bearer used to transmit the second QoE measurement report is a signaling radio bearer SRB4 of the second radio bearer.

In a case where the functions of the integrated modules are implemented in the form of hardware, the embodiments of the present disclosure provide a possible structural schematic diagram of a communication apparatus involved in the above-mentioned embodiments. As shown in FIG. 19, the communication apparatus 190 includes: a processor 1901, a memory 1902, a bus 1903, and a communication interface 1904. The processor 1901 and the memory 1902 are connected via the bus 1903.

The processor 1901 is a control center of the communication apparatus, which may be a processor or a collective term for a plurality of processing elements. For example, the processor 1901 may be a general-purpose central processing unit (CPU), or other general-purpose processors. Herein, the general-purpose processor may be microprocessors, or may be any conventional processors.

As an embodiment, the processor 1901 may include one or more CPUs, such as CPU0 and CPU1 in FIG. 19.

The memory 1902 may be a read-only memory (ROM), or other static storage devices that may store static information and instructions, a random access memory (RAM), or other dynamic storage devices that may store information and instructions, or an electrically erasable programmable read-only memory (EEPROM), a magnetic disk storage medium or other magnetic storage device, or any other medium that can be used to carry or store desired program codes in the form of instructions or data structures and can be accessed by a computer, but it is not limited thereto.

As a possible implementation, the memory 1902 may exist independently of the processor 1901, and the memory 1902 may be connected to the processor 1901 via the bus 1903. The memory 1902 is configured to store instructions or program codes. When the processor 1901 revokes and executes the instructions or program codes stored in the memory 1902, the sensor determining method provided by the embodiments of the present disclosure may be implemented.

In another possible implementation, the memory 1902 may be integrated with the processor 1901.

The bus 1903 may be an Industry Standard Architecture (ISA) bus, a Peripheral Component Interconnect (PCI) bus, or an Extended Industry Standard Architecture (EISA) bus. This bus may be divided into address bus, data bus, control bus, etc. For ease of representation, only one thick line is used in FIG. 19, but it does not show that there is only one bus or one type of bus.

The communication interface 1904 is used for connection with other devices through a communication network. The communication network may be Ethernet, wireless access network, wireless local area networks (WLAN), etc. The communication interface 1904 may include a receiving unit used to receive data and a transmitting unit used to transmit data.

It is pointed out that the structure shown in FIG. 19 does not constitute a limitation on the communication apparatus 190. In addition to the components shown in FIG. 19, the communication apparatus 190 may include more or fewer components than those illustrated, or combine certain components, or arrange the components in different ways.

In a design, in the communication apparatus 190 provided in the embodiments of the present disclosure, the communication interface may also be integrated into the processor.

In another hardware structure of the communication apparatus provided by the embodiments of the present disclosure, the communication apparatus may include a processor and a communication interface coupled with each other.

The functions of the processor may refer to the description of the above-mentioned processor. In addition, the processor also has a storage function, which may refer to the function of the above-mentioned memory.

The communication interface is used to provide data to the processor. The communication interface may be an internal interface of the communication apparatus, or an external interface of the communication apparatus.

It is noted that, the another hardware structure mentioned above does not constitute a limitation on the communication apparatus. In addition to the components of the another hardware, the communication apparatus may include more or fewer components, or combine certain components, or arrange the components in different ways.

In a case where the functions of the integrated module are implemented in the form of hardware, a structural schematic diagram of middleware involved in the embodiments provided by the embodiments of the present disclosure may refer to the structural schematic diagram of the processing machine.

In a case where the functions of the integrated module are implemented in the form of hardware, a structural schematic diagram of an access network device involved in the embodiments provided by the embodiments of the present disclosure may refer to the description of the communication apparatus 190, which is not repeated herein.

From the description of the above implementations, those skilled in the art will clearly understand that, for convenience and brevity of description, the division of the various functional modules are exemplary. In practical applications, the above-mentioned functions are allocated to different functional modules as needed. The internal structure of the apparatus is divided into different functional modules to complete all or part of the functions described above. For the specific working procedure of the above-described system, apparatus, and unit, reference may be made to the corresponding procedures in the aforementioned method embodiments, which will not repeated herein.

Herein, the computer readable storage medium may be, for example, but is not limited to, an electronic, magnetic, optical, electromagnetic, infrared, or semiconductor system, apparatus or device, or any combination thereof. More specific examples (non-exhaustive list) of the computer readable storage medium include: electrical connections with one or more conductors, portable computer disks, hard disks, random access memories (RAM), read only memories (ROM), erasable programmable read only memories (EPROM), registers, hard disks, optical fiber, portable compact disc read-only memories (CD-ROM), optical storage devices, magnetic storage devices or any suitable combination thereof, or any other form of computer readable storage medium known in the art. An exemplary storage medium is coupled to the processor such that the processor may read information therefrom, and write information thereto. Of course, the storage medium may also be an integral part of the processor. The processor and the storage medium may reside in an Application Specific Integrated Circuit (ASIC). In the embodiments of the present disclosure, the computer readable storage medium may be any tangible medium that containing or storing a program for use by or in connection with an instruction execution system, apparatus, or device.

There are only specific implementations of the present disclosure above, but the protection scope of the present disclosure is not limited thereto. Any changes or replacements within the technical scope disclosed in the present disclosure shall fall within the protection scope of the present disclosure. Therefore, the protection scope of the present disclosure shall be subject to the protection scope of the claims.

## Claims

1. A quality of experience (QoE) measurement method, **characterized in that** the method is applied to a first access network device, the first access network device is a secondary node (SN), and the method comprises:
determining configuration information for a QoE measurement, wherein the configuration information for the QoE measurement is used to instruct a terminal device to perform the QoE measurement, and the configuration information for the QoE measurement comprises an unencapsulated target QoE measurement parameter used to optimize the first access network device; and
transmitting the configuration information for the QoE measurement to the terminal device.

2. The method according to claim 1, wherein the determining the configuration information for the QoE measurement comprises:
receiving a first indication message from a second access network device, wherein the first indication message comprises an identifier of the QoE measurement and a QoE measurement parameter set, the QoE measurement parameter set comprises at least one unencapsulated QoE measurement parameter, and the second access network device is a master node (MN);
determining, from the QoE measurement parameter set, a QoE measurement parameter used to optimize the first access network device as the target QoE measurement parameter; and
determining the configuration information for the QoE measurement, according to the target QoE measurement parameter.

3. The method according to claim 1 or 2, wherein the transmitting the configuration information for the QoE measurement to the terminal device comprises:
transmitting the configuration information for the QoE measurement to the terminal device based on a first radio bearer, wherein the first radio bearer is used to transmit information between the first access network device and the terminal device.

4. The method according to claim 2, wherein the transmitting the configuration information for the QoE measurement to the terminal device comprises:
transmitting a second indication message to the second access network device, wherein the second indication message is used to instruct the second access network device to transmit, based on a second radio bearer, the configuration information for the QoE measurement to the terminal device, and the second radio bearer is used to transmit information between the second access network device and the terminal device.

5. The method according to claim 2 or 4, wherein the first indication message further comprises at least one of: an internet protocol address of a QoE measurement collection entity, a service type of the QoE measurement, and a type of the QoE measurement.

6. The method according to claim 1 or 2, wherein the configuration information for the QoE measurement further comprises configuration information for a third radio bearer, the third radio bearer is used to transmit the configuration information for the QoE measurement between the first access network device and the terminal device.

7. The method according to claim 2, wherein the first indication message is carried in secondary node-terminal device application layer measurement reconfiguration information (S-NG-RAN node UE Application Layer Measurement Configuration Information); the S-NG-RAN node UE Application Layer Measurement Configuration Information is carried in secondary node quality management control reconfiguration information (S-NG-RAN node QMC Configuration Information); the S-NG-RAN node QMC Configuration Information is carried in a secondary node addition request (S-NODE ADDITION REQUEST) or a secondary node modification request (S-NODE MODIFICATION REQUEST); the configuration information for the QoE measurement is carried in secondary node to master node container (S-NG-RAN node to M-NG-RAN node Container) information; the S-NG-RAN node to M-NG-RAN node Container information is carried in a response to the secondary node addition request (S-NODE ADDITION REQUEST ACKNOWLEDGE) or a response to the secondary node modification request (S-NODE MODIFICATION REQUEST ACKNOWLEDGE).

8. The method according to claim 3, wherein the first radio bearer used to transmit the configuration information for the QoE measurement is a signaling radio bearer SRB3 of the first radio bearer.

9. The method according to claim 4, wherein the second radio bearer used to transmit the configuration information for the QoE measurement is a signaling radio bearer SRB1 of the second radio bearer.

10. A quality of experience (QoE) measurement method, **characterized in that** the method is applied to a terminal device and comprises:
receiving configuration information for a QoE measurement from a first access network device, wherein the configuration information for the QoE measurement is used to instruct the terminal device to perform the QoE measurement; the configuration information for the QoE measurement comprises an unencapsulated target QoE measurement parameter used to optimize the first access network device, and the first access network is a secondary node (SN).

11. The method according to claim 10, wherein the configuration information for the QoE measurement further comprises configuration information for a third radio bearer, and the third radio bearer is used to transmit the configuration information for the QoE measurement between the first access network device and the terminal device.

12. The method according to claim 10, wherein the method further comprises:
receiving target configuration information from a second access network device, wherein the target configuration information comprises configuration information generated by the first access network device, and the second access network device is a master node (MN);
in response to determining that the target configuration information does not comprise configuration information for a first radio bearer, acquiring configuration information for a second radio bearer, wherein the first radio bearer is used to transmit information between the terminal device and the first access network device, and the second radio bearer is used to transmit information between the terminal device and the second access network device; and
establishing the second radio bearer according to the configuration information for the second radio bearer, and transmitting a third indication message to the second access network device based on the second radio bearer, wherein the third indication message is used to instruct the second access network device to transmit a first QoE measurement report to the first access network device, and the first QoE measurement report is obtained by performing measurement based on the configuration information for the QoE measurement configured by the first access network device.

13. The method according to claim 12, wherein the method further comprises:
in response to determining that the configuration information comprises the configuration information for the first radio bearer, establishing the first radio bearer according to the configuration information for the first radio bearer, and transmitting the first QoE measurement report to the first access network device based on the first radio bearer.

14. The method according to claim 12, wherein the transmitting the third indication message to the second access network device based on the second radio bearer comprises:
transmitting a fourth indication message to the second access network device based on the second radio bearer, wherein the fourth indication message comprises the third indication message and a second QoE measurement report, and the second QoE measurement report is obtained by performing measurement based on the configuration information for the QoE measurement configured by the second access network device.

15. The method according to claim 13, wherein the method further comprises:
receiving configuration information for a third radio bearer from the first access network device, wherein the third radio bearer is used to transmit the first QoE measurement report; and
establishing the third radio bearer according to the configuration information for the third radio bearer, and transmitting the first QoE measurement report to the first access network device based on the third radio bearer.

16. The method according to any one of claims 12 to 15, wherein the first QoE measurement report comprises an identifier of the first QoE measurement and a measurement result of the target QoE measurement parameter, and the measurement result is unencapsulated.

17. The method according to claim 12 or 14, wherein the first QoE measurement report is carried in a radio resource bearer transfer (RRC Transfer) information, or is carried in target information; the target information is used for transmission of the first QoE measurement report and/or a second QoE measurement report, and the second QoE measurement report is obtained by performing measurement based on the configuration information for the QoE measurement configured by the second access network device.

18. The method according to any one of claims 12 to 15, wherein the first radio bearer used to transmit the first QoE measurement report is a signaling radio bearer SRB5 of the first radio bearer.

19. The method according to claim 14, wherein the second radio bearer used to transmit the third indication message and/or the second QoE measurement report is a signaling radio bearer SRB4 of the second radio bearer.

20. A communication apparatus, for a first access network device, **characterized in that** the first access network device comprises a communication unit and a processing unit;
the processing unit is configured to determine configuration information for a quality of experience (QoE) measurement, wherein the configuration information for the QoE measurement is used to instruct a terminal device to perform the QoE measurement, and the configuration information for the QoE measurement comprises an unencapsulated target QoE measurement parameter used to optimize the first access network device; and
the communication unit is configured to transmit the configuration information for the QoE measurement to the terminal device.

21. A communication apparatus, for a terminal device, **characterized in that** the communication apparatus comprises a communication unit and a processing unit;
the processing unit is configured to instruct the communication unit to receive configuration information for a QoE measurement from a first access network device, wherein the configuration information for the QoE measurement is used to instruct the terminal device to perform the QoE measurement, the configuration information for the QoE measurement comprises an unencapsulated target QoE measurement parameter used to optimize the first access network device, and the first access network device is a secondary node (SN).

22. A communication apparatus, **characterized by** comprising a processor and a communication interface, wherein the communication interface is coupled with the processor, and the processor is configured to run a computer program or instructions to implement the QoE measurement method according to any one of claims 1 to 19.

23. A computer readable storage medium having instructions stored therein, **characterized by** the instructions, when being executed by a computer, cause the computer to perform the QoE measurement method according to any one of claims 1 to 19.
